# EUROPEAN PATENT SPECIFICATION

(11) **EP 2 944 663 B1**
(45) Date of publication and mention of the grant of the patent: **18.10.2017**
(21) Application number: 15166111.3
(22) Date of filing: 01.05.2015
(51) Int. Cl.: C08G 63/685, C08G 63/91

(54) **ALIPHATIC POLYESTER, METHOD OF PREPARING THE SAME, AND POLYMER ORGANIZER**
ALIPHATISCHES POLYESTER, VERFAHREN ZUR HERSTELLUNG DAVON UND POLYMERORGANISATOR
POLYESTER ALIPHATIQUE, PROCÉDÉ DE PRÉPARATION DE CELUI-CI ET ORGANISATEUR POLYMÈRE

(30) Priority: 13.05.2014 JP 2014099383
(43) Date of publication of application: 18.11.2015
(73) Proprietor: Ricoh Company, Ltd., Tokyo 143-8555 (JP)
(72) Inventor: Miyahara, Kaori, Ohta-ku, Tokyo 143-8555 (JP); Nemoto, Taichi, Ohta-ku, Tokyo 143-8555 (JP); Arai, Yoko, Ohta-ku, Tokyo 143-8555 (JP); Chiba, Susumu, Ohta-ku, Tokyo 143-8555 (JP); Kobayashi, Shohta, Ohta-ku, Tokyo 143-8555 (JP); Shimada, Yoshihito, Ohta-ku, Tokyo 143-8555 (JP)
(74) Representative: Maury, Richard Philip

(56) References cited:
- US-A1- 2006 047 088
- US-B2- 8 552 138

## Description

### BACKGROUND

### Technical Field

The present invention relates to aliphatic polyester having an amide bond.

### Description of the Related Art

The aliphatic polyester is conventionally used for a fiber for sutures, a sheet for biocompatible materials, particles for cosmetics and a film for plastic bags. Some of the aliphatic polyester have biodegradability such as polylactic acids. Recently, demands therefor have been increasing because of its low environmental load and high functionality. A method of reacting a ring-opening polymerizable monomer while melted is known as a method of preparing the aliphatic polyester. As a method of subjecting lactide to ring-opening polymerization to prepare a polylactic acid, Japanese published unexamined application No. JP-H08-259676-A discloses a method of polymerizing lactide while melted at 195°C with tin octylate as a catalyst. The method obtains a polylactic acid having a weight-average molecular weight about 180,000.

In addition, Japanese published unexamined application No. JP-2011-208115-A discloses a method of polymerizing a ring-opening polymerizable monomer in a compressible fluid under the presence of an organic catalyst to prepare a polylactic acid. The method obtains a polylactic acid having a weight-average molecular weight about 55,000.

When a polymer is used to form a thin film, the polymer needs to have high viscosity or high molecular weight. Therefore, the aliphatic polyester prepared by these methods has too low viscosity or molecular weight to form a thin film.

As a method of polymerizing aliphatic polyester, a method of chain-extending aliphatic polyester with a chain extender is known. International Publication No. WO2004/033528 discloses polymerizing a ring-opened (co)polymer of cyclic ester with an oxazoline compound and a chain extender to obtain polymeric aliphatic polyester having a weight-average molecular weight about 230,000.

International Publication No. WO2009/110472 discloses ring-extending an aliphatic polyester resin and an isocyanate compound under the presence of an amide catalyst to polymerize them. Thus, a polymeric aliphatic polyester resin having a weight-average molecular weight about 150,000 is obtained. Further, Japanese published unexamined application No. JP-2006-63111-A discloses ring-extending a biodegradable polyester resin with a polycarbodiimide compound to obtain polymeric aliphatic polyester having a weight-average molecular weight about 130,000. When the aliphatic polyester is chain-extended by the chain extenders, an amide bond is formed at a bonded point between the aliphatic polyester and the chain extender to make the polymer have high viscosity.

However, when the aliphatic polyester is ring-extended with an amide bond by conventional methods, the reaction progress is restricted due to increase of viscosity, resulting in insufficient polymerization of the aliphatic polyester. Therefore, applications thereof are limited.

### SUMMARY

Accordingly, one object of the present invention is to provide aliphatic polyester applicable in wider fields.

Another object of the present invention is to provide a method of preparing the aliphatic polyester.

A further object of the present invention is to provide a polymer organizer including the aliphatic polyester.

These objects and other objects of the present invention, either individually or collectively, have been satisfied by the discovery of an aliphatic polyester having a number-average molecular weight of from 500,000 to 2,000,000, comprising an esteratic site and an amidic site, wherein the content of the amidic site is from 1 x 10⁻³% to 1 x 10⁻¹% by mol based on total weight of the esteratic site and the amidic site.

These and other objects, features and advantages of the present invention will become apparent upon consideration of the following description of the preferred embodiments of the present invention taken in conjunction with the accompanying drawings.

### BRIEF DESCRIPTION OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a typical phase diagram showing status of a substance against temperature and pressure;
FIG. 2 is a phase diagram for defining a range of compressible fluids; and
FIG. 3 is a system diagram showing an example of continuous polymerization process.

### DETAILED DESCRIPTION

The present invention provides aliphatic polyester applicable in wider fields. More particularly, the present invention relates to an aliphatic polyester having a number-average molecular weight of from 500,000 to 2,000,000, comprising an esteratic site and an amide bond, wherein the content of the amidic site is from 1 x 10⁻³% to 1 x 10⁻¹% by mol based on total weight of the esteratic site and the amidic site. The esteratic site is an ester group forming an ester bond in an aliphatic polyester main chain. The amidic site is an amide group forming an amide bond in an aliphatic polyester main chain.

Methods of preparing such aliphatic polyester include, but are not limited to, a method of reacting at least one of an oxazoline compound, an oxazine compound, an isocyanate compound and a carbodiimide compound with aliphatic polyester in a compressible fluid to chain-extend the aliphatic polyester.

In the present invention, the resultant aliphatic polyester may be formed to be a molding.

Hereafter, monomers, initiators, other raw materials, catalysts, compressible fluid and chain extenders are explained in this order.

### <Monomer>

As a monomer, aliphatic ester is preferably used to impart degradable function to the resultant polymer composition. Among these, ring-opening polymerizable monomers are more preferably used. The aliphatic polyester is used to obtain polyester as a polymer product.

The ring-opening polymerizable monomer is not particularly limited, but preferably includes a carbonyl group in its ring. An oxygen having high electronegativity is π-bonded with a carbon to form the carbonyl group.

In the carbonyl group, a π-bonded electron is attracted to negatively polarize the oxygen and positively polarize the carbon. Therefore, the carbonyl group has high reactivity. When the compressible fluid is carbon dioxide, carbon dioxide and the resultant polymer product are assumed to have high affinity with each other because the carbonyl group has a structure similar to that of carbon dioxide. Thus, the compressible fluid increases the effect of plasticization of the resultant polymer. Aring-opening polymerizable monomer having an ester bond is more preferably used as the ring-opening polymerizable monomer including a carbonyl group in its ring. The ring is not limited to have the shape of a circle, and may have the shape of a polygon such as a tetragon. The ring-opening polymerizable monomer includes a cyclic ester.

### -Cyclic Ester-

The cyclic ester is not particularly limited, but preferably a cyclic dimer obtained by dehydrating and condensing an L-body and/or a D-body of a compound having the following formula (1):

R-C*-H(-OH)(-COOH) (1)

wherein R represents an alkyl group having 1 to 10 carbon atoms; and C* represents an asymmetric carbon.

Specific examples of the compound having the formula (1) include, but are not limited to, mirror image isomers of lactic acid, 2-hydroxybutanoic acid, 2-hydroxypentanoic acid, 2-hydroxyhexanic acid, 2-hydroxyheptanic acid, 2-hydroxyoctanic acid, 2-hydroxynonanic acid, 2-hydroxydecanic acid, 2-hydroxyunndecanic acid and 2-hydroxydodecanic acid. Among these, the mirror image isomers of lactic acid is preferably used in terms of reactivity and availability.

The cyclic ester includes aliphatic lactone. Specific examples of the aliphatic lactone include, but are not limited to, β-propiolactone, β-butyrolactone, γ-butyrolactone, γ-hexanolactone, γ-octanolactone, δ-valerolactone, δ-hexanolactone, δ-octanolactone, ε-caprolactone, β-dodecanolactone, α-methyl-γ-butyrolactone, β-methyl-δ-valerolactone, glycolide and lactide. Particularly, the ε-caprolactone is preferably used in terms of reactivity and availability.

These ring-opening polymerizable monomers can be used alone or in combination.

### <Initiator>

The initiator is used to control a molecular weight of a polymer product obtained by ring-opening polymerization.

The initiator is not particularly limited, and alcohols, e.g., any mono, di-, poly-, saturated and unsaturated aliphatic alcohols can be used.

Specific examples of the alcohols include monoalcohols such as methanol, ethanol, propanol, butanol, pentanol, hexanol, heptanol, nonanol, decanol, lauryl alcohol, myristyl alcohol, cetyl alcohol and stearyl alcohol; diols such as ethylene glycol, 1,2-propanediol, 1,3-propanediol, 1,3-butanediol, 1,4-butanediol, hexane diol, nonane diol, tetramethylene glycol and polyethylene glycol; and polyols such as glycerol, sorbitol, xylitol, ribitol, erythritol and triethanolamine. Ester lactate includes methyl lactate, ethyl lactate, etc. These can be used alone or in combination.

Diblock and triblock copolymers including a polymer having an alcohol residue at the end such as polycaprolactone diol and polytetramethylene glycol can also be used.

An amount of the initiator in a polymerization process is not particularly limited, and when L-lactide is used as a monomer, is preferably from 0.1 to 0.05 mol per 99.9 to 99.95 mol of L-lactide, and more preferably 0.083 mol per 99.917 mol of L-lactide. In order to prevent polymerization from unevenly starting, a ring-opening polymerizable monomer and an initiator are preferably mixed well before the ring-opening polymerizable monomer contacts a catalyst.

### <Other Raw Materials>

Other raw materials are not particularly limited, and include an additive.

### (Additive)

The ring-opening polymerization may include an additive when necessary. Specific examples thereof include, surfactants, antioxidants, stabilizers, antifogging agents, UV absorbers, pigments, colorants, inorganic particulate materials, fillers, thermal stabilizers, retardants, nucleating agents, antistatic agents, surface wetting improvers, incineration auxiliary gents, lubricants, natural products, release agents, plasticizers, etc. Polymerization terminators such as benzoic acid, hydrochloric acid, phosphoric acid, metaphosphoric acid, acetic acid and lactic acid can be used when necessary after polymerization. The polymer composition preferably includes the additive in an amount of 0 to 5 parts by weight.

In the present invention, a surfactant soluble in the compressible fluid and having affinity with the compressible fluid and the ring-opening polymerizable monomer is preferably used. Such a surfactant uniformly proceeds a polymerization reaction, narrows molecular weight distribution of the product, and easily produces particulate polymers. The surfactant may be included in the compressible fluid or the ring-opening polymerizable monomer. When carbon dioxide is used as a compressible fluid, a surfactant having a group having affinity with the carbon dioxide and a group having affinity with the monomer in its molecule is used. The surfactants include fluorine surfactants and silicon surfactants.

The stabilizers include epoxidized soybean oil, carbodiimide, etc. The antioxidants include 2, 6-di-t-butyl-4-methylphenol, butylhydroxyanisole, etc. The antifogging agents include glycerin fatty acid ester, monostearyl citrate, etc. The fillers include clay, talc, silica, etc. having effects of UV absorber, thermal stabilizer, retardant, inner release agent and nucleating agent. Pigments include titanium oxide, carbon black, ultramarine, etc.

### <Catalyst>

A catalyst used in preparation of the cyclic product is explained. The catalyst is not particularly limited, and include organic catalysts, metallic catalysts, etc.

### -Organic Catalyst-

The organic catalyst is not particularly limited, and preferably contributes to ring-opening polymerization reaction of the ring-opening polymerizable monomer, releases and regenerates when reacting with alcohol after forming an active intermediate with the ring-opening polymerizable monomer without including a metallic atom.

When polymerizing the ring-opening polymerizable monomer having an ester bond, a nitrogen compound working as a nucleophile having basicity is preferably used, and a cyclic compound including a nitrogen atom is more preferably used as the organic catalyst. Specific examples the cyclic compound include, cyclic monoamines such as quinuclidine; cyclic diamines such as 1, 4-diazabicyclo-[2.2.2]octane (DABCO) and 1, 5-diazabicyclo(4,3,0)nonane-5; cyclic diamine compounds having an amidine skeleton such as 1, 8-diazabicyclo[5.4.0]undeca-7-ene(DBU)), diazabicyclononen; cyclic triamine compounds having a guanidine skeleton such as 1, 5, 7-triazabicyclo[4.4.0]deca-5-ene (TBD) and diphenylguanidine (DPG) ; heterocyclic aromatic organic compounds including a nitrogen atom such as N, N-dimethyl-4-aminopyridine (DMAP), 4-pyrolidinopyridine (PPY), pyrrocoline, imidazole, pryimidine and purine; and N-heterocyclic carbene such as 1, 3-di-tert-butylimidazole-2-ylidene (ITBU), etc. Among these, DABCO, DBU, DPG, TBD, DMAP, PPY and ITBU are preferably used. Cationic catalysts can also be used, but they draw out a hydrogen atom from a main chain of the polymer (back-biting), and the polymer has a wide molecular weight distribution and is difficult to have high molecular weight.

Among these organic catalysts, DBU is a liquid having a boiling point at room temperature. When such organic catalysts are used, the resultant polymer product is depressurized to remove the organic catalysts therefrom almost quantitatively. The organic catalysts and removal thereof depend on an intended use of the product.

Specific examples of the metallic catalysts include, but are not limited to, tin compounds such as octyltin, dibutyltin and di(2-ethylhexane)tin; aluminum compounds such as aluminum acetylacetonate and aluminum acetate; titanium compounds such as tetraisopropyl titanate and tetrabutyl titanate; zirconium compounds such as zirconium isopropoxide; and antimony compounds such as antimony trioxide.

The organic catalyst and an amount used thereof depend on combinations of the compressible fluid and the ring-opening polymerizable monomer and are not necessarily specified, but the organic catalyst is preferably used in an amount of 0.01 to 15 mol%, more preferably from 0.1 to 1 mol%, and furthermore preferably from 0.3 to 0.5 mol% per 100 mol% of the ring-opening polymerizable monomer. When less than 0.01 mol%, the organic catalyst is deactivated before the polymerization is completed and a polymer having a desired molecular weight is unobtainable. When greater than 15 mol%, the polymerization is difficult to control.

The organic catalyst (without including a metallic atom) is preferably used as a catalyst used in a polymerization process of an application needing safety and stability of the product.

### <Compressible Fluid>

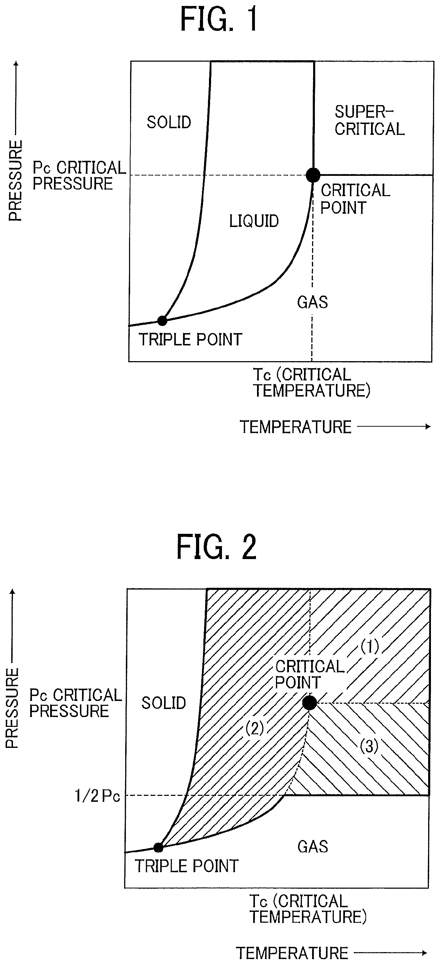

The compressible fluid used in preparation of the cyclic product is explained, referring to FIGS. 1 and 2. FIG. 1 is a typical phase diagram showing status of a substance against temperature and pressure. FIG. 2 is a phase diagram for defining a range of compressible fluids.

The compressible fluid in the present invention means a status of a material present in any one of regions (1), (2) and (3) in FIG. 2 in the phase diagram in FIG. 1.

In the regions, the material has a very high density and in known to show a behavior different from that at normal temperature and normal pressure. When the material is present in the region (1), it is s supercritical fluid. The supercritical fluid is present as a noncondensable high-density fluid at a temperature and a pressure over a limit (critical point) to which gas and a liquid can coexist, does not condense even when compressed, and in a state of supercritical temperature or more and a supercritical pressure or more. When the material is present in the region (2), it is a liquid. In the present invention, it is a liquidated gas obtained by compressing a material which is gas at normal temperature (25°C) and normal pressure (1 atmosphere). When the material is present in the region (3), it is gas. In the present invention, it is a high-pressure gas having a pressure not less than 1/2 Pc.

Specific examples of the materials usable in a compressible fluid include carbon monoxide, carbon dioxide, dinitrogen monoxide, nitrogen, methane, ethane, propane, 2, 3-dimethylbutane, ethylene, etc. Particularly, the carbon dioxide having a critical pressure about 7.4 MPa and a critical temperature about 31°C is preferably used because it is easy to become supercritical, and inflammable and easy to handle. These can be used alone or in combination.

A pressure when polymerizing, i.e., the compressible fluid, which may be a liquidated gas or a high-pressure gas, preferably has a pressure to become supercritical to increase solubility of the monomer in the compressible fluid and to uniformly and quantitatively perform the polymerization. When the compressible fluid is carbon dioxide, it preferably has a pressure not less than 3.7 Mpa, more preferably not less than 5 Mpa, and furthermore preferably not less than 7.4 Mpa which is a critical pressure in consideration of efficient reaction and polymer conversion ratio. In addition, when the compressible fluid is carbon dioxide, it preferably has a temperature not less than 25°C because of the same reason. In the present invention, the compressible fluid is not particularly limited in its concentration as long as it is capable of dissolving or plasticizing the ring-opening polymerizable monomer and a polymer produced thereby.

### <Chain Extender>

In the present invention, an amide bond in the aliphatic polyester is formed by chain extension reaction. Specific examples of chain extenders capable of forming the amide bond through chain extension reaction with the aliphatic polyester include oxazoline compounds, oxazine compounds, isocyanate compounds and carbodiimide compounds. The chain extenders may be monomers or polymers. Among these compounds, the isocyanate compound having an isocyanate group, the oxazoline compound having an oxazoline group and polycarbodiimide are preferably used because of reactivity.

Specific examples of the oxazoline compounds include, but are not limited to, 2-oxazoline, 2-methyl-2-oxazoline, 2-isopropyl-2-oxazoline, 2-butyl-2-oxazoline, 2-phenyl-2-oxazoline, 2, 2'-bis-(2-oxazoline), 2, 2'-methylene-bis-(2-oxazoline), 2, 2'-ethylene-bis-(2-oxazoline), 2,2'-trimethylene-bis-(2-oxazoline), 2, 2 '-tetramethylene-bis-(2-oxazoline), 2, 2'-hexamethylene-bis-(2-oxazoline), 2, 2'-octamethylene-bis-(2-oxazoline), 2, 2'-ethylene-bis-(4, 4'-dimethyl-2-oxazoline), 2, 2'-p-2, 2'-bis-(2-oxazoline) compounds such as phenylene-bis-(2-oxazoline), 2, 2'-m-phenylene-bis-(2-oxazoline), 2, 2'-m-phenylene-bis-(4,4'-dimethyl-2-oxazoline), bis-(2-oxazolinylcyclohexane) sulfide, bis-(2-oxazolinylnorbornane) sulfide, and polymeric compounds having an end of the molecular chain or a side chain two or more oxazoline ring structures is introduced into.

The oxazoline compound may be a polymer including an oxazoline group. Specific examples thereof include acrylic polymers including an oxazoline group such as polystyrene including an oxazoline group, acrylic polymers including an oxazoline group and styrene-acrylic polymers including an oxazoline group. Specific examples of the industrially available polymers including an oxazoline group include epocros® K series, WS series and RPS from Nippon Shokubai Co., Ltd.

Specific examples of the oxazine compounds include, but are not limited to, 2-methoxy-5, 6-dihydro-4H-1,3-oxazine, 2-hexyloxy-5, 6-dihydro-4H-1, 3-oxazine, 2-decyloxy-5, 6-dihydro-4H-1, 3-oxazine, 2-cyclohexyloxy-5, 6-dihydro-4H-1, 3-oxazine, 2-allyloxy-5, 6-dihydro -4 H-1, 3-oxazine, 2-crotyloxy-5, 6-dihydro-4H-1, 3-oxazine, 2, 2'-bis(5, 6-dihydro-4H-1, 3-oxazine), 2, 2'-methylene bis(5, 6-dihydro-4H-1, 3-oxazine), 2, 2'-ethylenebis(5, 6-dihydro-4H-1, 3-oxazine), 2, 2,'- hexamethylene bis(5, 6-dihydro-4H-1, 3-oxazine), 2, 2'-p-phenylene bis(5, 6-dihydro-4H-1, 3-oxazine), and 2, 2'-P, P'- diphenylene bis(5, 6-dihydro-4H-1, 3-oxazine).

The isocyanate compounds are not particularly limited, and include diisocyanate and triisocyanate. Diisocyanate is preferably used. Specific example thereof include, but are not limited to, tolylene-2, 4-diisocyanate, tolylen-2, 6-diisocyanate, 2, 2,'- diphenylmethane diisocyanate, 2, 4'-diphenylmethane diisocyanate, 4, 4'-diphenylmethane diisocyanate, naphthylene-1, 5- diisocyanate, xylylene diisocyanate, isophorone diisocyanate, methylene bis cyclohexyl diisocyanate, norbornene diisocyanate, hexamethylene diisocyanate and cyclohexane diisocyanate.

Specific examples of the polycarbodiimide include poly(1, 6-hexamethylene carbodiimide), poly (4, 4'-methylene bis cyclohexyl carbodiimide), poly(1, 3-cyclohexylene carbodiimide), poly (1, 4-cyclohexylene carbodiimide), poly(4, 4'-diphenylmethane carbodiimide), poly (3, 3'-dimethyl-4, 4'-diphenylmethane carbodiimide), poly (naphthylene carbodiimide), poly (p-phenylene carbodiimide), poly (m-phenylene carbodiimide), poly (tolyl carbodiimide), poly (diisopropyl carbodiimide), poly (methyl-diisopropyl phenylene carbodiimide), poly (triethyl phenylene carbodiimide), poly (triisopropyl phenylene carbodiimide), poly (1, 3, 5-triisopropyl benzene) carbodiimide and poly (1, 5-diisopropyl benzene) carbodiimide. Further, decarbonated and condensed one, or two or more known diisocyanate can also be used. Specific examples of the known diisocyanate include, but are not limited to, toluene diisocyanate, diphenylmethane diisocyanate, hydrogenation diphenylmethane diisocyanate, isophorone diisocyanate, tetramethyl xylylene diisocyanate, 3, 3'-dimethyl-4, 4'-diphenylmethane diisocyanate, 3, 3'-diethyl-4, 4'-diphenylmethane diisocyanate, 3, 3'-diisopropyl -4, 4'-diphenylmethane diisocyanate, 3, 3',5, 5'-tetramethyl-4, 4 '-diphenylmethane diisocyanate, 3, 3',5, 5'-tetraethyl-4, 4 '-diphenylmethane diisocyanate and 3, 3',5, 5'-tetraisopropyl-4, 4'-diphenylmethane diisocyanate. An isocyanate group may remain at the end, and the isocyanate group may be modified with amine or alcohol. In addition, widely known crosslinkers for polyester can also be used as the polycarbodiimide. Specific examples thereof include LA-1 from Nisshinbo Holdings, Inc. and Stabaxol® from Rhein Chemie Rheinau GmbH.

### <Low-Polarity Solvent>

In the present invention, a low-polarity solvent can be used to decrease viscosity of a reactant when chain-extended. The low-polarity solvent has a relative dielectric constant of from 3 to 10. The low-polarity solvent has higher affinity with aliphatic polyester having an amide bond than the compressible fluid used in a polymerization process. While decreasing viscosity of a reactant when chain-extended, the low-polarity solvent easily releases from aliphatic polyester after chain extension. The low-polarity solvent is preferably gas at normal temperature to easily release from aliphatic polyester. The low-polarity solvent is preferably a compressible fluid under the condition of chain extending reaction because of decrease of viscosity.

Specific examples of the low-polarity solvent usable as a compressible fluid include, , but are not limited to, n-pentane, n-heptane, 2-methylhexane, 3-methylhexane, cyclohexane, methyl cyclohexane, ethyl cyclohexane, benzene, toluene, xylene, isopropylbenzene, 1, 2, 3, 4-tetralin, dimethyl ether, diethyl ether, isopropyl ether, anisole, methyl tertiary butyl ether, ethyl tertiary butyl ether and glycol dimethyl ether.

Among the low-polarity solvents, dimethyl ether is preferably used in particular because of being inexpensive, easy to handle as a compressible fluid with low boiling point and low critical point, easy to dehydrate in the following process, low toxic, and low in environment load.

Methods of adding the low-polarity solvent include 1) previously mixing the low-polarity solvent in carbon dioxide, 2) mixing the low-polarity solvent with a chain extender, and 3) mixing the low-polarity solvent before adding a chain extender after a polymer is polymerized. The method of 3) is preferably used in terms of mixability and affinity of a mixture of the low-polarity solvent and the compressible fluid with a polymer including the compressible fluid. The low-polarity solvent preferably includes dimethyl ether in an amount of from 10 to 80% by mol and carbon dioxide in an amount of form 20 to 90% by mol, and more preferably includes dimethyl ether in an amount of from 30 to 70% by mol and carbon dioxide in an amount of form 30 to 70% by mol, based on total mol number of dimethyl ether and carbon dioxide.

### «Polymerization Reactor»

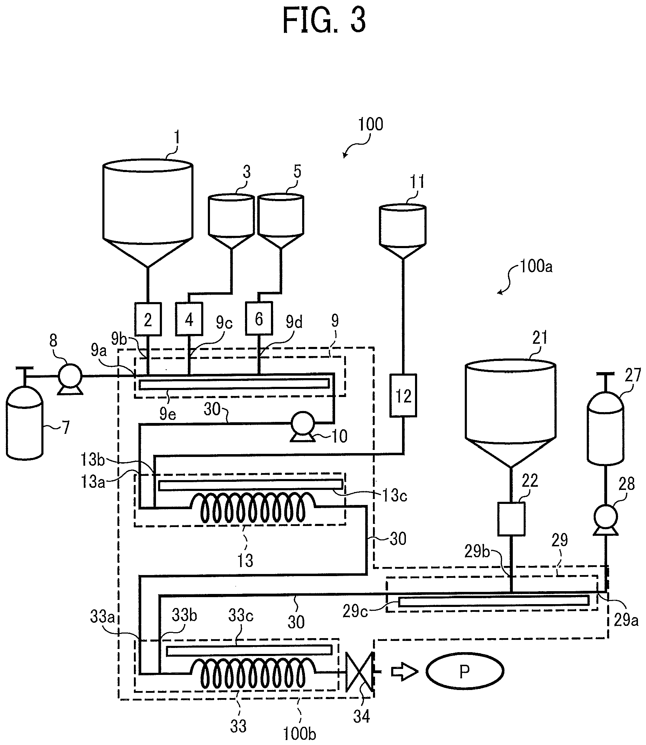

Next, a polymerization reactor preferably used to prepare the aliphatic polyester is explained, referring to FIG. 3. FIG. 3 is a system diagram showing an example of continuous polymerization process. In FIG. 3, a polymerization reactor 100 includes a feed unit 100a feeding raw materials and a compressible fluid and a polymerization reactor main body 100b polymerizing the raw materials and the compressible fluid fed by the feed unit 100a.

The feed unit 100a includes tanks 1, 3, 5, 7, 11, 21 and 27, metering feeders 2, 4 and 22, and metering pumps 6, 8, 12 and 28.

The tank1 of the feed unit 100a stores a ring-opening polymerizable monomer as a monomer. The stored ring-opening polymerizable monomer may be a powder or a liquid. The tank 3 stores a solid (powdery or particulate) initiator and a solid additive. The tank 5 stores a liquid initiator and a liquid additive. Apart or all of the initiator and the additive may previously be mixed with the ring-opening polymerizable monomer to be stored in the tank 1. The tank 7 stores the compressible fluid. The tank 11 stores a catalyst. The tank 21 stores a chain extender. The tank 27 stores a low-polarity solvent. The tanks 7 and 27 may store gas, a liquid or a solid which becomes a compressible fluid in the process of being fed to the polymerization reactor main body 100b or when heated or pressurized therein. In this case, gas, a liquid or a solid is heated or pressurized to be a status (1), (2) or (3) in FIG. 2 in the polymerization reactor main body 100b.

The metering feeder 2 weighs the ring-opening polymerizable monomer stored in the tank 1 and continuously feeds it to the polymerization reactor main body 100b. The metering feeder 4 weighs the solid stored in the tank 3 and continuously feeds it to the polymerization reactor main body 100b. The metering feeder 6 weighs the liquid stored in the tank 5 and continuously feeds it to the polymerization reactor main body 100b. The metering feeder 8 continuously feeds the compressible fluid stored in the tank 7 to the polymerization reactor main body 100b at a constant pressure and flow amount. The metering feeder 12 weighs the catalyst stored in the tank 11 and feeds it to the polymerization reactor main body 100b. The metering feeder 22 weighs the chain extender stored in the tank 21 and continuously feeds it to the polymerization reactor main body 100b. The metering feeder 22 continuously feeds the low-polarity solvent stored in the tank 27 to the polymerization reactor main body 100b at a constant pressure and flow amount. In the embodiment of the present invention, continuous feeding is against feeding every batch, and means continuously obtaining ring-opening polymerized polymer. Namely, as long as the ring-opening polymerized polymer is continuously obtained, each material may be intermittently fed. When the initiator and the additive are both solids, the feed unit 100a may not have the tank 5 and the metering pump 6. Similarly, when the initiator and the additive are both liquids, the feed unit 100a may not have the tank 3 and the metering pump 4.

In the embodiment of the present invention, the polymerization reactor main body 100b is a cylindrical unit having a monomer inlet port introducing the ring-opening polymerizable monomer at an end and a polymer outlet port discharging a polymer obtained by polymerizing the monomer at the other end. In addition, the polymerization reactor main body 100b further has a compressible fluid inlet port introducing the compressible fluid at an end, a catalyst inlet port between an end and the other end, and a chain extender inlet port between the catalyst inlet port and the other end. Further, the polymerization reactor main body 100b has a contact part 9 and a reaction part 13 located at an end, and a reaction part 33 located at the other end. Each part or units of the polymerization reactor main body 100b are connected with each other through a pressure resistant piping 30 transporting materials, the compressible fluid or the produced polymer as shown in FIG. 3. Each part or units of the polymerization reactor main body 100b have cylindrical members passing the above materials, etc.

The contact part 9 of the polymerization reactor main body 100b is formed of a pressure resistant unit or a tube continuously contacting the raw materials, i.e., the ring-opening polymerizable monomer, the initiator and the additive continuously fed from the tanks 1, 3 and 5 respectively, and the compressible fluid continuously fed from the tank 7. The raw materials melt or dissolve at the contact part 9 when contacting the compressible fluid. In the embodiment of the present invention, melting means that the raw materials or the produced polymer contact the compressible fluid to be plasticized while swelling and liquidated. Dissolving means that the raw materials dissolve in the compressible fluid. The dissolved ring-opening polymerizable monomer forms a fluid phase and the melted ring-opening polymerizable monomer forms a melt phase. One of the fluid phase and the melt phase is preferably formed to uniformly proceed the reaction. The ring-opening polymerizable monomer is preferably melted because the reaction proceeds at a ratio of the raw materials higher than that of the compressible fluid. In the embodiment of the present invention, the raw materials and the compressible fluid are continuously fed to continuously contact them at the contact part 9 at a constant ratio of concentration. Thus, the raw materials efficiently melt or dissolve.

A tank-shaped stirrer or a cylindrical stirrer may be located at the contact part 9. The cylindrical stirrer having an end from which raw materials are fed and the other end from which a mixture such as a melt phase or a fluid phase is taken out is preferably used. Specific examples of the stirrer include, but are not limited to, monoaxial screws, biaxial screws engaged with each other, biaxial mixers having many stirring elements engaged or overlapped with one another; kneaders having spiral stirring elements engaged with one another, and static mixers. Particularly, the biaxial or multiaxial stirrers engaged with one another are preferably used because of having less adherence of reactants to the stirrer and a container and self-cleanability. When a stirrer is not located at the contact part 9, the contact part 9 is formed of a part of the pressure resistant piping 30. When the contact part 9 is formed of a part of the pressure resistant piping 30, the ring-opening polymerizable monomer is preferably liquidated in advance before fed to the contact part 9 to mix the raw materials therein without fail.

The contact part 9 includes an inlet port 9a as an embodiment of a compressible fluid inlet port introducing the compressible fluid fed by a metering pump 8 from the tank 7, an inlet port 9b as an embodiment of a inlet port introducing the ring-opening polymerizable monomer fed by the metering feeder 2 from the tank 1, an inlet port 9c introducing a powder fed by the metering feeder 4 from the tank 3, and an inlet port 9d introducing a liquid fed by the metering pump 6 from the tank 5. In the embodiment of the present invention, each of the inlet ports 9a, 9b, 9c and 9d is formed of a joint. The joint is not particularly limited, and known reducers, couplings, Y, T, and outlets. In addition, a heater 9e is located at the contact part 9 to heat the raw materials and compressible fluid fed.

A liquid feed pump 10 is located between the contact part 9 of the polymerization reactor main body 100b. The liquid feed pump 10 feeds the raw materials melted or dissolved at the contact part 9 to the reaction part 13.

The reaction part 13 of the polymerization reactor main body 100b is formed of a pressure resistant unit or tube for mixing the melted or dissolved raw materials fed by the liquid feed pump 10 with the catalyst fed by the metering pump 12 to continuously ring-opening polymerize the ring-opening polymerizable monomer. The reaction part 13 ring-opening polymerizes the ring-opening polymerizable monomer to continuously obtain a polymer as an intermediate.

A tank-shaped mixer or a cylindrical mixer may be located at the reaction part 13, and the cylindrical mixer having less dead space is preferably used. When the mixer is located at the reaction part 13, polymer particles is prevented from precipitating because of a difference of density between the raw materials and the polymer, and therefore the polymerization is more uniformly and quantitatively proceeded. Screws engaged with one another, stirring elements such as 2 flight (elliptical) and 3 flight (triangular), and biaxial or multiaxial mixers having a circular or a multi-leaf (clover) impeller are preferably used in terms of self-cleaning.
When the raw materials including the catalyst are fully mixed, static mixers dividing and joining flows with a guide unit in multiple stages can also be used. Specific examples of the static mixers include multilayering mixers disclosed in Japanese published examined applications Nos. JP-S47-15526-B, JP-S47-15527-B, JP-S-47-15528 and JP-S47-15533; Kenix type mixers disclosed in Japanese published unexamined application No. JP-S47-33166-A; and similar mixers without movable parts. When a stirrer is not located at the reaction part 13, the reaction part 13 is formed of a part of the pressure resistant piping 30. In this case, the piping 30 is not particularly limited in shape, but preferably has the shape of a spiral.

The reaction part 13 includes an inlet port 13a introducing the raw materials dissolved or melted at the contact part 9 and an inlet port 13b as an embodiment of catalyst inlet port introducing the catalyst fed by the metering pump 12 from the tank 11. In the embodiment of the present invention, each of the inlet ports 13a and 13b is formed of a joint. The joint is not particularly limited, and known reducers, couplings, Y, T, and outlets. The reaction part 13 may include gas outlet port to remove exhalation. Further, the reaction part 13 includes a heater 13c heating the raw materials fed.

The polymerization reactor main body 100b includes a contact part 29. The contact part 29 is a pressure resistant unit or tube continuously contacting the chain extender fed from the tank 21 with the low-polarity solvent fed from the tank 27 to melt or dissolve the chain extender. Thus, the melted or dissolved chain extender is fed to a reaction part 33. The contact part 29 includes an inlet port 29a introducing the low-polarity solvent fed by the metering pump 28 from the tank 27 and an inlet port 29b introducing the chain extender fed by the metering feeder 22 from the tank 21. In the embodiment of the present invention, each of the inlet ports 29a and 29b is formed of a joint. The joint is not particularly limited, and known reducers, couplings, Y, T, and outlets. In the embodiment of the present invention, since the contact part 29 has similar configurations as those of the contact part 9, detailed explanations thereof are omitted.

The reaction part 33 is formed of a pressure resistant unit or a tube contacting the melted or dissolved polymer as an intermediate obtained at the reaction part 13 with the chain extender melted or dissolved at the contact part 29 to continuously perform chain extending reaction under the presence of the low-polarity solvent. The reaction part 33 includes an inlet port 33a for introducing the polymer as an intermediate and an inlet port 33b for introducing the melted or dissolved chain extender and the low-polarity solvent. In the embodiment of the present invention, each of the inlet ports 33a and 33b is formed of a joint. The joint is not particularly limited, and known reducers, couplings, Y, T, and outlets. In the embodiment of the present invention, since the reaction part 33 has similar configurations as those of the reaction part 13, detailed explanations thereof are omitted.

The reaction part 33 includes a pressure regulating valve 34 at an end. The pressure regulating valve 34 uses a pressure difference between outside and inside to send out a polymer product P polymerized at the reaction part 33 therefrom.

### «Polymerization Method»

A method of polymerizing the ring-opening polymerizable monomer with the polymerization reactor 100 is explained. The method includes a polymerization process continuously feeding at least the ring-opening polymerizable monomer and the compressible fluid to contact each other and ring-opening polymerize the ring-opening polymerizable monomer to continuously obtain a polymer as an intermediate. The method of the present invention includes a chain extending process contacting the intermediate with the chain extender to reach with each other to chain-extend the intermediate.

### [Polymerization Process]

First, a polymerization process of the present invention is explained. The metering feeders 2 and 4, and the metering pumps 6 and 8 are activated. Then, the ring-opening polymerizable monomer, the initiator, the additive and the compressible fluid in each of the tanks 1, 3, 5 and 7 are continuously are introduced from each of the inlet ports 9a, 9b, 9c and 9d into the tube of the contact part 9. The solid (powdery or particulate) raw materials occasionally have lower metering accuracy than the liquid raw materials. In this case, the solid material may previously be liquidated and stored in the tank 5, and introduced by the metering pump 6 into the tube of the contact part 9. The order of activating the metering feeders 2 and 4, and the metering pumps 6 and 8 is not particularly limited, but the metering pump 8 is preferably activated first because the initial raw materials are possibly solidified when fed to the reaction part 13 without contacting the compressible fluid.

The feed rate of the material of each of the metering feeders 2 and 4, and the metering pump 6 is adjusted to have a constant ratio, based on the specified amount ratio of the ring-opening polymerizable monomer, the initiator and the additive. The total weight (feed rate of the material (g/min)) of each of the raw materials fed by each of the metering feeders 2 and 4, and the metering pump 6 per a unit of time is adjusted, based in desired polymer properties and reaction time, etc. Similarly, the weight (feed rate (g/min)) of the compressible fluid fed by the metering pump 8 per a unit of time is adjusted, based in desired polymer properties and reaction time, etc. A ratio of the feed rate of the raw materials to the feed rate of the compressible fluid (feed rate of the raw materials/ feed rate of the compressible fluid) is preferably not less than 1, more preferably not less than 3, furthermore preferably not less than 5, and most preferably not less than 10. The ratio of the feed rate preferably has a maximum value not greater than 1,000, more preferably not greater than 100, and most preferably not greater than 50.

The ratio of the feed rate not less than 1 proceeds reaction while the raw materials and the resultant polymer have high concentration, i.e., a solid content concentration when the raw materials and the compressible fluid are fed to the reaction part 13. The solid content concentration in the polymerization then is largely different from that when a small amount of the ring-opening polymerizable monomer is conventionally dissolved in an overwhelming amount of the compressible fluid. In the embodiment of the present invention, the polymerization efficiently and stably proceeds even when solid content concentration therein is high. In the embodiment of the present invention, the ratio of the feed rate may be less than 1. Even in this case, the resultant polymer has no problem in quality, but economic efficiency deteriorates. When greater than 1,000, it is possible that the compressible fluid insufficiently melts the ring-opening polymerizable monomer, and desired reaction does not uniformly proceed on occasion.

The raw materials and the compressible fluid are continuously introduced into the tube of the contact part 9, and continuously contact one another then. The ring-opening polymerizable monomer, the initiator and the additive melt or dissolve in the contact part 9. When the contact part 9 includes a stirrer, the raw materials and the compressible fluid may be stirred. In order to prevent the compressible fluid from changing to gas, the temperature and the pressure in the tube of the reaction part 13 are controlled to have at least not less than triple point of the compressible fluid. This is controlled by an output of the heater 9e or a feed amount of the compressible fluid. In the embodiment of the present invention, the ring-opening polymerizable monomer may be melted at a temperature no higher than a melting point thereof at normal pressure. It is thought this is because the contact part 9 has a high pressure inside and the ring-opening polymerizable monomer has a melting point lower than that at normal pressure. Therefore, even when an amount of the compressible fluid is small relative to that of the ring-opening polymerizable monomer, it melts in the contact part 9.

Timing of heating or stirring the raw materials and the compressible fluid may be controlled at the contact part 9 such that the raw materials efficiently melt or dissolve. The raw materials and the compressible fluid may be heated or stirred after or while contacted with each other. The ring-opening polymerizable monomer and the compressible fluid may be contacted with each other after the ring-opening polymerizable monomer is heated at a temperature not lower than the melting point to be more certainly melted. When a biaxial mixer is located at the contact part 9, arrangement of screws, positions of the inlet ports 9a, 9b, 9c and 9d, the heater 9e of the contact part 9 are properly controlled to realize this. In the embodiment of the present invention, the additive is fed to the contact part 9 separately from the ring-opening polymerizable monomer. The additive may be fed together with the ring-opening polymerizable monomer. In addition, the additive may be fed after polymerization reaction. In this case, the additive may be added while kneaded after a polymer is taken out from the reaction part 13. The raw materials melted or dissolved at the contact part 9 are fed by the liquid feed pump 10 to the reaction part 13 through the inlet port 13a. Meanwhile, the catalyst in the tank 11 is weighed by the metering pumping 12, and fed to the reaction part 13 through the inlet port 13b. Since the catalyst can activate even at room temperature, the catalyst is added after the raw materials are melted or dissolved in the embodiment of the present invention. When the catalyst is added while the raw materials are not fully melted or dissolved, the reaction ununiformly proceeds on occasion.

The raw materials fed by the liquid feed pump 10 and the catalyst fed by the metering pump 12 are fully mixed by the mixer of the reaction part 13 or heated by the heater 13c to have a specified temperature when necessary. Thus, the ring-opening polymerizable monomer is ring-opening polymerized under the presence of the catalyst to continuously produce a polymer as an intermediate in the reaction part 13.

The minimum (polymerization reaction) temperature in ring-opening polymerizing the ring-opening polymerizable monomer is not particularly limited, and preferably 40°C, more preferably 50°C, and furthermore preferably 60°C. When less than 40°C, the compressible fluid occasionally takes long time to melt or does not fully melt the ring-opening polymerizable monomer, or the catalyst does not fully activate on occasion. Therefore, the polymerization occasionally lowers in reaction rate or quantitative reaction.

The maximum polymerization reaction temperature is not particularly limited, but preferably 150°C or a temperature higher than a melting point of the ring-opening polymerizable monomer by 50°C whichever is higher, more preferably 100°C or a temperature higher than the melting point thereof by 30°C whichever is higher, furthermore preferably 90°C or the melting point thereof whichever is higher, and most preferably 80°C or a temperature lower than the melting point thereof by 20°C whichever is higher. The polymerization reaction temperature higher than the melting point thereof by 30°C tends to parallely cause depolymerization contrary to the ring-opening polymerization, and is difficult to quantitatively proceed the polymerization. Since a ring-opening monomer having low melting point such as the ring-opening polymerizable monomer which is a liquid at room temperature increase activation of the catalyst, the polymerization reaction temperature may be higher than the melting point thereof by 50°C. Even in this case, the polymerization reaction temperature is preferably not higher than 150°C. The polymerization reaction temperature is controlled by the heater 13c located at the reaction part 13 or a heat from the outside thereof. A polymer obtained from the polymerization reaction may be used to measure the polymerization reaction temperature.

In the embodiment of the present invention, the polymerization reaction time (average holding time in the reaction part 13) depends on a targeted molecular weight, but preferably not longer than 1 hr, more preferably not longer than 45 min, and furthermore preferably not longer than 30 min. The polymerization reaction time may be not longer than 20 min in the embodiment of the present invention.

The polymerization pressure, i.e., a pressure of the compressible fluid may be a pressure to convert the compressible fluid fed from the tank 7 into liquidated gas (FIG. 2 (2)) or high-pressure gas (FIG. 2 (3)), but preferably a pressure to convert the compressible fluid 7 into a supercritical fluid (FIG. 2 (1)). The compressible fluid in the state of the supercritical fluid promotes melting of the ring-opening polymerizable monomer to uniformly and quantitatively proceed the polymerization reaction. Carbon dioxide when used as the compressible fluid preferably has a pressure not less than 3.7 Mpa, more preferably not less than 5 Mpa, and furthermore preferably a supercritical pressure of 7.4 Mpa in consideration of reaction efficiency and polymer conversion ratio. In addition, carbon dioxide when used as the compressible fluid preferably has a temperature not lower than 25°C by the same reason.

The reaction part 13 preferably includes a moisture content in an amount not greater than 4% by mol, more preferably not greater than 1% by mol, and furthermore preferably not greater than 0.5% by mol per 100% by mol. A moisture content greater than 4% by mol itself works as an initiator, and which occasionally makes it difficult to control molecular weight. In order to control a moisture content in polymerization, moistures included in the ring-opening polymerizable monomer and the other raw materials may be removed in advance when necessary.

A polymer before a chain extender is added thereto, i.e., a polymer obtained from a polymerization process as an intermediate preferably has a number-average molecular weight (Mn) not less than 250,000, and more preferably not less than 300,000. When lower than 250,000, the viscosity is occasionally too low to form a thin film. Further, the polymer as an intermediate preferably has a weight-average molecular weight (Mw) not less than 500,000, and more preferably not less than 600,000. When lower than 500,000, the viscosity is occasionally too low to form a thin film.

### [Chain Extending Process]

Next, the chain extending process in the method of preparing the polymer in the embodiment of the present invention is explained. First, the metering feeder 22 and the metering pump 28 are activated to continuously feed the chain extender and the low-polarity solvent in the respective tanks 21 and 27 into the tube of the contact part 29 through the respective inlet ports 29a and 29b. The chain extender and the low-polarity solvent are continuously introduced into the tube of the contact part 29 to continuously contact with each other. Then, the chain extender melts or dissolves in the contact part 29. Detailed explanations of the introduction procedures and conditions of the chain extender and the low-polarity solvent in the chain extending process are omitted because they are similar to those of the ring-opening polymerizable monomer and the compressible fluid in the polymerization process.

In the present invention, the low-polarity solvent is added when the chain extender is added to the polymer after polymerized in the compressible fluid to prevent the polymer form quickly increasing the viscosity, which makes continuous polymerization easier. The polymer quickly increases the viscosity to occasionally cause clogging of the pipe or difference of the flow rate in the piping without the low-polarity solvent, resulting in inability of stability production.

In the embodiment of the present invention, a ratio of the (feed) amount of the ring-opening polymerizable monomer fed by the metering feeder 2 per a unit of time in the polymerization process to that of the chain extender by the metering feeder 22 per a unit of time in the chain extending process may be determined on the basis of a desired molecular weight. More specifically, the chain extender is preferably added to the polymer as an intermediate in an amount of from 0.1 to 10.0 mol, and more preferably from 0.3 to 6.0 mol per 100 mol of the ring-opening polymerizable monomer. When less than 0.1 mol, the viscosity is occasionally too low to form a thin film. When greater than 10 mol, the polymer is occasionally gelated, resulting in defective thin film. When polycarbodiimide is used as the chain extender, it is preferably added to the polymer in amount of from 0.1 to 40.0 mol, and more preferably from 1.0 to 20.0 mol per 100 mol of the ring-opening polymerizable monomer. When less than 0.1 mol, the chain extender is difficult to mix with the polymer and the molecular weight distribution tends to be broad. When greater than 40.0 mol, the unreacted chain extender works as a plasticizer, and the polymer does not have enough viscosity to form a film and the cost increases.

Produced in the reaction part 13, the melted or the dissolved polymer as an intermediate is continuously fed to the reaction part 33 through the inlet port 33a. Meanwhile, the chain extender melted or dissolved at the contact part 29 is continuously fed to the reaction part 33 with the low-polarity solvent through the inlet port 33b. Then, the polymer as an intermediate and the chain extender continuously contact each other in the reaction part 33. The polymer as an intermediate and the chain extender are fully stirred by the stirrer of the reaction part 33 and heated by the heater 33c to have a specified temperature. Then, the polymer as an intermediate and the chain extender are reacted with each other under the presence of the low-polarity solvent in the reaction part 33 to form a polymer as the final product.

The minimum (chain extending) temperature at the reaction part 33 is not particularly limited, but preferably 40°C. When lower than 40°C, it is possible that the compressible fluid takes time to melt does not fully melt or the catalyst does not fully activate. This tends to lower the polymerization reaction rate and occasionally does not quantitatively proceed the polymerization reaction. The maximum polymerization reaction temperature is not particularly limited, but preferably 100°C. When higher than 100°C, depolymerization contrary to the ring-opening polymerization tends to parallely occur, and the polymerization reaction occasionally does not quantitatively proceed.

In the embodiment of the present invention, the chain extending reaction time at the reaction part 33 (an average holding time at the reaction part 33) depends on a desired molecular weight, but preferably not longer than 1 hr, more preferably not longer than 45 min, and furthermore preferably not longer than 30 min.

A (chain extending reaction) pressure in the reaction part 33, i.e., a pressure of the low-polarity solvent may be a pressure at which the compressible fluid and the low-polarity solvent fed from the respective tanks 7 and 27 become a liquidated gas (FIG. 2 (2)) or a high-pressure gas (FIG. 2 (3)), but is preferably a pressure at which they become a supercritical fluid ((FIG. 2 (1)).

A polymer product P having passed the chain extending reaction in the reaction part 33 is sent out thereof from the pressure regulating valve 34. A rate of sending the polymer product P out from the pressure regulating valve 34 is preferably constant to fix a pressure in the polymerization filled with the compressible fluid and obtain a uniform polymer. Therefore, feed rates of inner liquid feed mechanism of the reaction parts 13 and 33, inner liquid feed mechanism of the contact parts 9 and 29, the metering feeder 2, 4 and 22 and the metering pumps 6, 8 and 28 are controlled to fix a back pressure of the pressure regulating valve 34. The control method may be an intermittent feed type, but a continuous or a step method gradually increasing and decreasing rotational rates of the pumps is preferably used in many cases. In whichever way, such control stably produces a uniform polymer product.

A catalyst remaining in the aliphatic polyester obtained in the embodiment of the present invention is removed when necessary. Specific examples of the removal methods include, but are not particularly limited to, removals under reduced pressure, a method of using a material dissolving a catalyst as an entrainer to extract and remove the catalyst, and a method of adsorbing the catalyst with a column to remove when the catalyst is a compound having a boiling point. In this case, the catalyst may be removed after the aliphatic polyester is taken out from the reaction part 33 (a batch method) or without taking out the aliphatic polyester therefrom. Conditions of reducing pressure depends on a boiling point of the catalyst in removals under reduced pressure. A temperature when reducing pressure to remove a catalyst is from 100 to 120°C, which is lower than a temperature at which the aliphatic polyester is depolymerized. When an organic solvent is used to extract the catalyst, the organic solvent occasionally needs removing after extracting the catalyst. Therefore, a compressible fluid is preferably used as a solvent to extract a catalyst. The catalyst can be extracted by known methods such as methods of extracting perfumes, etc.

### <Polymer Product>

Next, properties of the aliphatic polyester as a polymer product are explained.

The aliphatic polyester obtained by the above method preferably has a number-average molecular weight (Mn) of from 500,000 to 2,000,000, and more preferably from 1,000,000 to 2,000,000. The aliphatic polyester having a number-average molecular weight (Mn) of from 500,000 to 2,000,000 can preferably form a thin film. When lower than 500,000, the polymer lowers in viscosity, resulting in occasional inability of forming a thin film. When larger than 2,000,000, the polymer is gelated, resulting in occasional defects of the thin film.

The aliphatic polyester obtained by the above method preferably has a weight-average molecular weight (Mw) of from 1,200,000 to 5,000,000, and more preferably from 2,000,000 to 5,000,000. The aliphatic polyester having a weight-average molecular weight (Mw) of from 1,200,000 to 5,000,000 can preferably form a thin film. When lower than 1,200,000, the polymer lowers in viscosity, resulting in occasional inability of forming a thin film. When larger than 5,000,000, the polymer is gelated, resulting in occasional defects of the thin film.

The aliphatic polyester obtained by the above method is an aliphatic polyester having an amide bond, which includes an amide bond in an amount of from 1 x 10⁻³ to 1 x 10⁻¹% by mol and more preferably from 3 x 10⁻³ to 6 x 10⁻²% by mol based on total amount of ester bond and the amide bond. The aliphatic polyester including an amide bond in an amount of from 1 x 10⁻³ to 1 x 10⁻¹% by mol can easily from a thin film having a thickness not thicker than 10 µm. When less than 1 x 10⁻³% by mol, the polymer has too low viscosity to form a thin film. When larger than 1 x 10⁻¹% by mol, the polymer is gelated, resulting in occasional defects of the thin film. Methods of weighing the amide bond are not particularly limited, but include a method of using NMR (Nuclear Magnetic Resonance) mentioned later in Example.

The polymer product preferably includes a residual ring-opening polymerizable monomer in an amount, but is not limited to, not greater than 5,000 ppm by weight, more preferably not greater than 1,000 ppm by weight, and furthermore preferably not greater than 500 ppm by weight. The polymer product including a residual ring-opening polymerizable monomer in an amount not greater than 5,000 ppm by weight not only deteriorates in thermostability but also proceeds decomposition on occasion because a carboxylic acid produced when the residual ring-opening polymerizable monomer opens the ring has capability of a catalyst promoting hydrolysis.

The content of the residual ring-opening polymerizable monomer is represented by a ratio [weight of the residual ring-opening polymerizable monomer/total weight of the ring-opening polymerizable monomer (= weight of the polymer product including the residual ring-opening polymerizable monomer)]. The content of the residual ring-opening polymerizable monomer is weighed on the basis of "Voluntary standards about the food container packing made by a synthetic resin such as polyolefin, the third edition revised edition, June, 2004 supplement, Part 3, hygienic test method".

According the above method, low-molecular-weight components such as the residual ring-opening polymerizable monomer are produced less and a polymer product having small yellow index (YI) is obtained. The yellow index (YI) of the polymer product is not particularly limited, but preferably not greater than 15, more preferably not greater than 10, and furthermore preferably not greater than 5. When greater than 15, the appearance occasionally has a problem. This is occasionally noticeable particularly when used as a food wrapping container.

The yellow index (YI) of the polymer product is determined by preparing a resin plate formed of the polymer product having a thickness of 2 mm, and measuring the plate according to JIS-K7103 using a SM color computer from Suga Test Instruments Co., Ltd.

As an embodiment of the present invention, the polymer product is formed to a particulate material, a film, a sheet, a molding and a fiber to be widely used in applications such as commodities, industrial materials, agricultural articles, hygienic equipment, pharmaceuticals, cosmetics, toner for electrophotography, wrapping materials, electrical appliance materials, home electric housings and automobile materials.

### «Molding»

A molding which is an embodiment of the present invention is formed of the polymer product.

The molding includes a particulate material, a film, a molded article, a fiber, etc.

### <Particulate Material>

Methods of forming the polymer product to a particulate material include a method of pulverizing the polymer product by conventional methods. The particulate material typically has a particle diameter, but is not particularly limited to, of from 1 to 50 µm. A colorant and a hydrophobic particulate material are mixed in the polymer product to form a toner for electrophotography. Besides the colorant and the hydrophobic particulate material, other additives such as a release agent and a charge controlling agent may be included. The additives may be mixed while the polymerization is performed, after the polymerization or added to the resultant polymerized product while melted and kneaded. Other particulate materials include DDS (Drug delivery System), etc.

### <Film>

The polymer product is formed to a thin film as an embodiment of the present invention, having a thickness not greater than 10 µm. The polymer product is stretched to form the film.

Methods of stretching the polymer product are not particularly limited, but include a monoaxial extension forming method applicable for stretching a general-purpose plastic, and a simultaneously or sequentially biaxial extension forming method such as tubular methods and tenter methods.

The film is typically formed at from 150 to 280°C. The formed film is subjected to mono or biaxial extension by roll methods, tenter methods, tubular methods, etc. The film is typically stretched at from 30 to 110°C, and preferably from 50 to 100°C. An extension ratio is typically 0.6 to 10 times vertically and horizontally. After stretched, the film may be heated by blowing hot wind, irradiating infrared, irradiating a microwave thereto or contacting the film on a heat roll. These extension forming methods form various stretched films such as a stretched sheet, a flat yarn, a stretched tape or band, a striped tape and a split yarn.

The stretched film may be subjected to a secondary fabrication for the purpose of having surface capabilities such as chemical capability, magnetic capability, mechanical capability, friction/abrasion/lubricity capability, optical capability, thermal capability and biocompatibility. Specific examples of the secondary fabrications include, but are not limited to, embossing, coating, adhering, printing, metallizing (plating), machining, and surface treatment such as antistatic processing, corona discharge processing, plasma processing, photochromism processing, physical vapor deposition, chemical vapor deposition, coating.

The stretched film obtained in the embodiment of the present invention may or may not include an organic solvent. The stretched film without an organic solvent is safe and widely used in applications such as medical applications, food wrapping applications, commodities, electrical appliance materials, home electric housings and automobile materials. Particularly, it is effectively used to wrap materials including foods vulnerable to oxygen or which may deteriorate. Durability of the stretched film can be increased and coloring thereof can be reduced even when including the residual monomer if the content thereof is 5,000 ppm or less by weight.

### <Sheet/Molding>

In the embodiment of the present invention, the sheet is the polymer product having the shape of a thin film and a thickness not less than 250 µm. The sheet is formed from the polymer product by conventionally known methods used for thermoplastic resins. Specific examples of the methods include, but are not limited to, a T-die method, an inflation method and a calendar method. Conditions of fabricating the polymer product into a sheet depend on the polymer product and apparatuses. When a polylactic acid is fabricated by the T-die method, it is preferably heated to have a temperature of from 150 to 250°C and extruded by an extruder from a T-die attached at the exit thereof to form a sheet.

In the embodiment of the present invention, the molding is a molded article. The concept of the molding includes not only finished products but also a part formed of the molding such as a grip of a tray and a product fitted with the grip.

Fabrication methods of fabricating the aliphatic polyester as the polymer product are not particularly limited, and conventionally known methods used for thermoplastic resins such as ejection molding, vacuum molding, compressed air molding, vacuum pressure molding and press molding. The polymer product may be melted and ejected from a molder to form a molding. In addition, the sheet obtained by the above method may be subjected to the press molding to form a molding. Conditions of fabricating the polymer product into a sheet depend on the polymer product and apparatuses. When a sheet of polylactic acid is subjected to the press molding by a molder, the molder may have a temperature of from 100 to 150°C. Further, the polymer product heated to have a temperature of from 150 to 250°C may be ejected from a molder having a temperature of form 20 to 80°C to form a molding. The polylactic acid having been for general use has high residual ratio of a metallic catalyst, an organic solvent and a monomer. When such a polylactic acid is heated and formed to be sheet-shaped, residues such as a metallic catalyst, an organic solvent and a monomer have the shape of a fish eye to occasionally impair the appearance and lower the strength. In addition, when such a polylactic acid is molded by metal molding or ejection molding, the appearance is impaired and the strength is lowered also on occasion.

The sheet and the molding in the embodiment of the present invention may or may not include an organic solvent. The sheet and the molding without an organic solvent are safe and widely used in applications such as industrial materials, commodities, agricultural articles, sheets for foods, pharmaceuticals and cosmetics, wrapping materials and trays. When the polymer product is a polymer having biodegradability such as polylactic acid and polycaprolactone, they are effectively used in applications possibly entering human bodies, such as wrapping materials for foods and medical sheets such as cosmetics and pharmaceuticals because they do not include a solvent or a metal. Durability of the product can be increased and coloring thereof can be reduced even when including the residual monomer if the content thereof is 5,000 ppm or less by weight.

### <Fiber>

The polymer product is applicable to fibers such as monofilament and multifilament. In the embodiment of the present invention, concept of the fiber includes not only a single fiber such as monofilament, but also intermediate products formed of a fiber such as a woven or nonwoven fabric and masks having woven or nonwoven fabrics.

In the embodiment of the present invention, the polymer product is melt-spun, cooled, stretched and fiberized by conventionally known methods to form a monofilament. A coating layer may be formed by conventionally known methods on the monofilament according to the application, and the coating layer may include an antibacterial, a colorant, etc. Further, the polymer product is melt-spun, cooled, stretched, opened, layered and heated by conventionally known methods to form a nonwoven fabric. The polymer product may include additives such as an antioxidant, a retardant, a UV absorber, an antistatic agent, an antibacterial and a binder resin. The additives may be mixed in polymerization, after polymerization or in the polymerized product while melted and kneaded.

The fiber obtained in the embodiment of the present invention may or may not include an organic solvent. The fiber without an organic solvent is safe and widely used in applications such as a fishing line, a fishing net, a suture for operation, electrical appliance materials, automobile materials and industrial materials when a monofilament. The fiber of the embodiment is widely used in applications such as fisheries, agriculture materials, buildings, engineering works materials, interiors, automobile members, wrapping materials, commodities and hygienic materials when a nonwoven fabric. Durability of the fiber can be increased and coloring thereof can be reduced even when including the residual monomer if the content thereof is 5,000 ppm or less by weight.

### EXAMPLES

Having generally described this invention, further understanding can be obtained by reference to certain specific examples which are provided herein for the purpose of illustration only and are not intended to be limiting. In the descriptions in the following examples, the numbers represent weight ratios in parts, unless otherwise specified.

A molecular weight, a molecular weight distribution, a content of amide bond in polylactic acid resin, a content of a residual ring-opening polymerizable monomer, a yellow index (YI value) and melt fluidity of the aliphatic polyester (polymer product) obtained in each of Examples and Comparative Examples were evaluated. In addition, whether a film obtained by molding the polymer product had an object having the shape of a fish eye was observed.

### < Polymer Molecular Weight Determination>

A molecular weight of a polymer was measured by GPC.
Measurer: GPC-8020 from Tosoh Corp.
Column: TSK G2000HXL and G4000HXL from Tosoh Corp.
Temperature: 40°C
Solvent: THF (tetrahydrofuran)
Flow Rate: 1.0 ml/min

From a molecular weight distribution of a polymer measured by the above-mentioned conditions from 1 mL of a sample having a concentration of 0.5% by weight, a number-average molecular weight (Mn) and a weight-average molecular weight (Mw) of the toner were determined using a molecular weight correction curve prepared by a mono-dispersion polystyrene standard sample. The molecular weight distribution is Mw/Mn.

### <Determination of Content of Amide Bond in Polylactic Acid Resin>

¹³C-NMR (Apparatus: ECA500 from JEOL Ltd., inner standard chloroform -d: δ = 77 ppm) of an aliphatic polyester (such as polylactic acid resins, etc.) obtained by a chain extending reaction using a chain extender such as an oxazoline was determined.

In this spectrum, from a ratio among δ = 170 to 180 ppm: δ = 150 to 170 ppm from carbon at ester bond of polyactic acid main chain: an integrated value of two or more of carbon of amide bond, the content of the amide bond base on total amount of the ester bond and the amide bond in the polyactic acid resin was determined and the number of amide bond units per one mol of the polyactic acid resin with a number-average molecular weight of the raw polylactic acid. The ester bond is an ester group forming an ester bond in the aliphatic polyester main chain. The amide bond is an amide group forming an amide bond in the aliphatic polyester main chain.

### <Content of Residual Monomer>

The content of the residual monomer of the aliphatic polyester composition such as the polylactic acid composition was determined by lactide quantity measurement method disclosed in "Voluntary standards about the food container packing made by a synthetic resin such as polyolefin, the third edition revised edition, June, 2004 supplement, Part 3, hygienic test method". Specifically, the aliphatic polyester composition such as the polylactic acid composition was uniformly dissolved in dichloromethane to prepare a solution. A mixed solution of acetone and cyclohexane was added thereto to prepare a supernatant liquid in which the aliphatic polyester composition of the polylactic acid composition reprecipitated. The supernatant liquid was provided to a gas chromatograph (GC) with a flame ionization detector (FID) to separate the residual monomer (lactide and glycolide) from the liquid. Then, the quantity of the residual monomer was determined by an inner standard method.

### «GC Measurement Conditions»

Column: capillary column (DB-17ms from J&W having a length of 30 m, an inner diameter of 0.25 mm and a thickness of 0.25 µm)
Internal Standard: 2, 6-dimethyl-γpyrone
Column Flow Quantity: 1.8 mL/min
Column Temperature: hold 1 min at 50°C. Heat at 25°C/min and hold 5 min at 320°C.
Detector: Flame Ionization Detector (FID)

### <Yellow Index (YI value)>

The polymer composition was formed to a resin pellet having a thickness of 2 mm, and the YI value was determined according to JIS-K7103 using a SM color computer from Suga Test Instruments Co., Ltd.

### <Melt Fluidity>

The polylactic composition was subjected to methyl flow rate (MFR) according to JIS-K7210. The methyl flow rate (MFR) was measured at 210°C and a load of 2.16 kg.

### <Evaluation Method of Film>

A sample of 1,000 mm x 1, 000 mm was visually observed to see if there are objects having the shape of a fish eye.

### [Evaluation Standard]

Excellent: No objects having the shape of a fish eye
Good: 1 to 2 objects having the shape of a fish eye
Fair: 3 or more objects having the shape of a fish eye

### (Example 1-1)

Ring-opening polymerization of L-lactide was performed using the polymerization reactor 100 in FIG. 3. The configuration of the polymerization reactor 100 was as follows.
(1) As for the tank 1 and the metering feeder 2 (plunger pump NP-S462 from Nihon Seimitsu Co., LTD), the tank 1 was filled with a mixture including L-lactide as a ring-opening polymerizable monomer having a melting point of 100°C from Purac Inc. and ethylene glycol as a polymerization initiator at a molar ratio of 99.900/0.100 respectively. The L-lactide was heated in the tank 1 at a temperature higher than the melting point thereof to be the state of being liquid.
(2) The tank 3 and the metering feeder 4 were not used.
(3) The tank 5 and the metering feeder 6 were not used.
(4) A carbon dioxide cylinder was used as the tank 7.
(5) The tank 27 included dimethyl ether.
(6) As for the tank 21 and the metering feeder 22 (plunger pump NP-S462 from Nihon Seimitsu Co., LTD), the tank 21 was filled with 2, 2'-m-phenylene-bis-(2-oxazoline) from Wako Pure Chemical Industries, Ltd. as a chain extender. 2, 2'-m-phenylene-bis-(2-oxazoline) was heated at 170°C to be the state of being liquid.
(7) As for the tank 11 and the metering pump 12 (Intelligent HPLC pump PU-2080 from JASCO Corp), the tank 11 was filled with di(2-ethylhexyl acid) tin as a catalyst.
(8) A biaxial stirrer equipped with screws engaged with each other, having a cylinder inner diameter of 30 mm and two axes rotating in the same direction at 30 rpm was used as the contact part 9.
(9) A biaxial stirrer equipped with screws engaged with each other, having a cylinder inner diameter of 30 mm and two axes rotating in the same direction at 30 rpm was used as the contact part 29.
(10) A biaxial kneader TME-18 from Toshiba Corp. having a cylinder inner diameter of 40 mm and two axes rotating in the same direction at 60 rpm was used as the reaction part 13.
(11) A biaxial kneader TME-18 from Toshiba Corp. having a cylinder inner diameter of 40 mm and two axes rotating in the same direction at 60 rpm was used as the reaction part 33.

First, the metering feeder 2 was activated to continuously feed the raw materials (lactide and ethylene glycol) in the tank 1 at a constant feed amount and a rate of 4 g/min to the biaxial stirrer of the contact part 9. In addition, the metering pump 8 was activated to continuously feed the carbon dioxide in the tank 7 to the biaxial stirrer of the contact part 9 so as to share 10 parts by weight per 100 parts by weight of the raw materials. Then, in the biaxial stirrer of the contact part 9, the raw materials, i.e., lactide and ethylene glycol, and a compressible fluid were continuously contacted with each other, and the raw materials were dissolved.

The raw materials dissolved at the contact part 9 were fed by the liquid feed pump 10 to the biaxial kneader of the reaction part 13. Meanwhile, the metering pump 12 was activated to feed the di(2-ethylhexyl acid) tin as a polymerization catalyst to the reaction part 13 in an amount of 500 ppm by weight based on total weight of the lactide. Then, ring-opening polymerization of the lactide was continuously performed in the reaction part 13 under the presence of di(2-ethylhexyl acid) tin (polymerization process) to continuously obtain a ring-opened polymer (polylactic acid) as an intermediate in the reaction part 13.

The metering pump 28 was activated to continuously feed dimethyl ether in the tank 27 to the biaxial stirrer of the contact part 29 in an amount of 70% by mol based on total % by mol of dimethyl ether and carbon dioxide (30% by mol). Then, in the contact part 9, carbon dioxide, the ring-opened polymer (polylactic acid) and dimethyl ether were continuously contacted with each other, and dimethyl ether was dissolved in carbon dioxide and the ring-opened polymer.

The metering feeder 22 was activated to continuously feed 2, 2'-m-phenylene-bis-(2-oxazoline) as a chain extender stored in the tank 21 at a constant feed amount and a rate of 0.18 g/min to the biaxial stirrer of the contact part 29. 2, 2'-m-phenylene-bis-(2-oxazoline) as a chain extender was added in an amount of 4 mols to 100 mols of the ring-opening polymerizable monomer (L-lactide).

The polymerized and melted ring-opened polymer (polylactic acid) as an intermediate in the reaction part 13, dimethyl ether which is both a low-polarity solvent and a compressible fluid, and 2, 2'-m-phenylene-bis-(2-oxazoline) as a chain extender were continuously fed to the biaxial kneader of the reaction part 33, in which they were continuously mixed (mixing process).

In Example 1-1, a pressure in each of the contact parts 9 and 29, and the reaction parts 13 and 33 was 15 Mpa by controlling opening and closing of the pressure regulating valve 34. The temperature of the liquid feed route of the biaxial stirrer of each of the contact parts 9 and 29 is 150°C at entrance and exit. The temperature of the liquid feed route of the biaxial stirrer of each of the reaction parts 13 and 33 is 170°C at entrance and exit.

An average hold time of the raw materials in the contact parts 9 and the reaction part 13 was 60 min by controlling pipings and the length thereof in the contact parts 9 and the reaction part 13. In addition, an average hold time of the raw materials in the contact parts 29 and the reaction part 33 was 20 min by controlling pipings and the length thereof in the contact parts 29 and the reaction part 33.

The pressure regulating valve 34 is fitted to the end of the reaction part 33, from which a polylactic acid composition P as the polymer product was continuously sent out.

The polymer product was molded by a general-purpose inflation molder at 200°C to a film having a thickness of 25 µm.

The molecular weight, the distribution thereof, the content of the amide bond in polylactic acid resin, the content of the residual ring-opening polymerizable monomer, the yellow index (YI value) and the melt fluidity of the polylactic acid composition were measured and evaluated as above. Whether the stretched film had an object having the shape of a fish eye was observed as above. The results are shown in Table 1, in which "E" of amide bond content represents an exponential notation.

### (Examples 1-2 to 1-5 and Comparative Examples 1-1 to 1-5)

The procedure for preparing the polylactic acid composition in Example 1-1 was repeated to prepare polylactic acid compositions of Examples 1-2 to 1-5 and Comparative Examples 1-1 to 1-5 except for changing the polymerization initiator and the quantity thereof, the quantity of the low-polarity solvent, the chain extender and the quantity thereof, and the temperature as shown in Table 1 or 4.

Properties of each of the polylactic acid compositions of Examples 1-2 to 1-5 and Comparative Examples 1-1 to 1-5 were evaluated as that of Example 1-1 was. The results are shown in Table 1 or 4.

### (Example 1-6)

The procedure for preparing the polylactic acid composition in Example 1-1 was repeated to prepare polylactic acid composition of Example 1-6 except for changing the ring-opening polymerizable monomer into glycolide, the quantity of the polymerization initiator, the quantity of the low-polarity solvent, the quantity of the chain extender, and the temperature as shown in Table 1.

Properties of the polylactic acid composition of Example 1-6 were evaluated as that of Example 1-1 was. The results are shown in Table 1.

### (Examples 1-7 and 1-8)

The procedure for preparing the polylactic acid composition in Example 1-1 was repeated to prepare polylactic acid compositions of Examples 1-7 and 1-8 except for changing the chain extender into an oxazine compound or a polymer including an oxazoline group, the quantity of the polymerization initiator, the quantity of the low-polarity solvent, the quantity of the chain extender, and the temperature as shown in Table 1. In Example 1-8, a polymer including an oxazoline group EPOCROS K-2020E from Nippon Shokubai Co., Ltd. was used as the chain extender.

Properties of the polylactic acid compositions of Examples 1-7 and 1-8 were evaluated as that of Example 1-1 was. The results are shown in Table 1.

### (Example 2-1)

L-lactide was ring-opening polymerized using the same polymerization reactor 100 in Example 1-1. However, the tank 1 was filled with a mixture including L-lactide as a ring-opening polymerizable monomer having a melting point of 100°C from Purac Inc. and ethylene glycol as a polymerization initiator at a molar ratio of 99.920/0.080 respectively. The L-lactide was heated in the tank 1 at a temperature higher than the melting point thereof to be the state of being liquid. The tank 21 was filled with isophoronediisocyanate as a chain extender, which was heated at 170°C to be the state of being liquid.

First, the metering feeder 2 was activated to continuously feed the raw materials (lactide and ethylene glycol) in the tank 1 at a constant feed amount and a rate of 4 g/min to the biaxial stirrer of the contact part 9. In addition, the metering pump 8 was activated to continuously feed the carbon dioxide in the tank 7 to the biaxial stirrer of the contact part 9 so as to share 10 parts by weight per 100 parts by weight of the raw materials. Then, in the biaxial stirrer of the contact part 9, the raw materials, i.e., lactide and ethylene glycol, and a compressible fluid were continuously contacted with each other, and the raw materials were dissolved.

The raw materials dissolved at the contact part 9 were fed by the liquid feed pump 10 to the biaxial kneader of the reaction part 13. Meanwhile, the metering pump 12 was activated to feed the di(2-ethylhexyl acid) tin as a polymerization catalyst to the reaction part 13 in an amount of 500 ppm by weight based on total weight of the lactide. Then, ring-opening polymerization of the lactide was continuously performed in the reaction part 13 under the presence of di(2-ethylhexyl acid) tin (polymerization process) to continuously obtain a ring-opened polymer (polylactic acid) as an intermediate in the reaction part 13.

The metering pump 28 was activated to continuously feed dimethyl ether in the tank 27 to the biaxial stirrer of the contact part 29 in an amount of 70% by mol based on total % by mol of dimethyl ether and carbon dioxide (30% by mol). Then, in the contact part 9, carbon dioxide, the ring-opened polymer (polylactic acid) and dimethyl ether were continuously contacted with each other, and dimethyl ether was dissolved in carbon dioxide and the ring-opened polymer.

The metering feeder 22 was activated to continuously feed isophoronediisocyanate as a chain extender stored in the tank 21 at a constant feed amount and a rate of 0.11 g/min to the biaxial stirrer of the contact part 29. Isophoronediisocyanate as a chain extender was added in an amount of 4 mols to 100 mols of the ring-opening polymerizable monomer (L-lactide).

The polymerized and melted ring-opened polymer (polylactic acid) as an intermediate in the reaction part 13, dimethyl ether which is both a low-polarity solvent and a compressible fluid, and isophoronediisocyanate as a chain extender were continuously fed to the biaxial kneader of the reaction part 33, in which they were continuously mixed (mixing process).

In Example 2-1, a pressure in each of the contact parts 9 and 29, and the reaction parts 13 and 33 was 15 Mpa by controlling opening and closing of the pressure regulating valve 34. The temperature of the liquid feed route of the biaxial stirrer of each of the contact parts 9 and 29 is 150°C at entrance and exit. The temperature of the liquid feed route of the biaxial stirrer of each of the reaction parts 13 and 33 is 170°C at entrance and exit.

An average hold time of the raw materials in the contact parts 9 and the reaction part 13 was 60 min by controlling pipings and the length thereof in the contact parts 9 and the reaction part 13. In addition, an average hold time of the raw materials in the contact parts 29 and the reaction part 33 was 20 min by controlling pipings and the length thereof in the contact parts 29 and the reaction part 33.

The pressure regulating valve 34 is fitted to the end of the reaction part 33, from which a polylactic acid composition P as the polymer product was continuously sent out.

The polymer product was molded by a general-purpose inflation molder at 200°C to a film having a thickness of 25 µm.

The molecular weight, the distribution thereof, the content of the amide bond in polylactic acid resin, the content of the residual ring-opening polymerizable monomer, the yellow index (YI value) and the melt fluidity of the polylactic acid composition were measured and evaluated as above. Whether the stretched film had an object having the shape of a fish eye was observed as above. The results are shown in Table 2.

### (Examples 2-2 to 2-5 and Comparative Examples 2-1 to 2-5)

The procedure for preparing the polylactic acid composition in Example 2-1 was repeated to prepare polylactic acid compositions of Examples 2-2 to 2-5 and Comparative Examples 2-1 to 2-5 except for changing the polymerization initiator and the quantity thereof, the quantity of the low-polarity solvent, the chain extender and the quantity thereof, and the temperature as shown in Table 2 or 4.

Properties of each of the polylactic acid compositions of Examples 2-2 to 2-5 and Comparative Examples 2-1 to 2-5 were evaluated as that of Example 2-1 was. The results are shown in Table 2 or 4.

### (Example 2-6)

The procedure for preparing the polylactic acid composition in Example 2-1 was repeated to prepare polylactic acid composition of Example 2-6 except for changing the ring-opening polymerizable monomer into glycolide, the quantity of the polymerization initiator, the quantity of the low-polarity solvent, the quantity of the chain extender, and the temperature as shown in Table 2.

Properties of the polylactic acid composition of Example 2-6 were evaluated as that of Example 2-1 was. The results are shown in Table 2.

### (Examples 2-7 and 2-8)

The procedure for preparing the polylactic acid composition in Example 2-1 was repeated to prepare polylactic acid compositions of Examples 2-7 and 2-8 except for changing the chain extender into hexamethylenediisocyanate and tolylenediisocyanate, the quantity of the polymerization initiator, the quantity of the low-polarity solvent, the quantity of the chain extender, and the temperature as shown in Table 2.

Properties of the polylactic acid compositions of Examples 2-7 and 2-8 were evaluated as that of Example 2-1 was. The results are shown in Table 2.

### (Example 3-1)

L-lactide was ring-opening polymerized using the same polymerization reactor 100 in Example 1-1. However, the tank 21 was filled with Stabaxol P from Rhine Chemie GmbH which is a carbodiimide compound as a chain extender polymerization. Stabaxol P was dissolved in methylene chloride solution having a concentration of 20% by weight to be used in the state of being liquid.

The metering pump 28 was activated to continuously feed dimethyl ether in the tank 27 to the biaxial stirrer of the contact part 29 in an amount of 70% by mol based on total % by mol of dimethyl ether and carbon dioxide (30% by mol). Then, in the contact part 9, carbon dioxide, the ring-opened polymer (polylactic acid) and dimethyl ether were continuously contacted with each other, and dimethyl ether was dissolved in carbon dioxide and the ring-opened polymer.

The metering feeder 22 was activated to continuously feed Stabaxol P as a chain extender stored in the tank 21 at a constant feed amount and a rate of 0.15 g/min to the biaxial stirrer of the contact part 29. Isophoronediisocyanate as a chain extender was added in an amount of 5 parts by weight to 100 parts by weight of the ring-opening polymerizable monomer (L-lactide).

The polymerized and melted ring-opened polymer (polylactic acid) as an intermediate in the reaction part 13, dimethyl ether which is both a low-polarity solvent and a compressible fluid, and Stabaxol P as a chain extender were continuously fed to the biaxial kneader of the reaction part 33, in which they were continuously mixed (mixing process).

In Example 3-1, a pressure in each of the contact parts 9 and 29, and the reaction parts 13 and 33 was 15 Mpa by controlling opening and closing of the pressure regulating valve 34. The temperature of the liquid feed route of the biaxial stirrer of each of the contact parts 9 and 29 is 150°C at entrance and exit. The temperature of the liquid feed route of the biaxial stirrer of each of the reaction parts 13 and 33 is 170°C at entrance and exit.

An average hold time of the raw materials in the contact parts 9 and the reaction part 13 was 60 min by controlling pipings and the length thereof in the contact parts 9 and the reaction part 13. In addition, an average hold time of the raw materials in the contact parts 29 and the reaction part 33 was 20 min by controlling pipings and the length thereof in the contact parts 29 and the reaction part 33.

The pressure regulating valve 34 is fitted to the end of the reaction part 33, from which a polylactic acid composition P as the polymer product was continuously sent out.

The polymer product was molded by a general-purpose inflation molder at 200°C to a film having a thickness of 25 µm.

The molecular weight, the distribution thereof, the content of the amide bond in polylactic acid resin, the content of the residual ring-opening polymerizable monomer, the yellow index (YI value) and the melt fluidity of the polylactic acid composition were measured and evaluated as above. Whether the stretched film had an object having the shape of a fish eye was observed as above. The results are shown in Table 3.

### (Examples 3-2 to 3-5 and Comparative Examples 3-1 to 3-5)

The procedure for preparing the polylactic acid composition in Example 3-1 was repeated to prepare polylactic acid compositions of Examples 3-2 to 3-5 and Comparative Examples 3-1 to 3-5 except for changing the polymerization initiator and the quantity thereof, the quantity of the low-polarity solvent, the chain extender and the quantity thereof, and the temperature as shown in Table 3 or 4.

Properties of each of the polylactic acid compositions of Examples 3-2 to 3-5 and Comparative Examples 3-1 to 3-5 were evaluated as that of Example 3-1 was. The results are shown in Table 3 or 4.

### (Example 3-6)

The procedure for preparing the polylactic acid composition in Example 3-1 was repeated to prepare polylactic acid composition of Example 3-6 except for changing the ring-opening polymerizable monomer into glycolide, the quantity of the polymerization initiator, the quantity of the low-polarity solvent, the quantity of the chain extender, and the temperature as shown in Table 3.

Properties of the polylactic acid composition of Example 3-6 were evaluated as that of Example 3-1 was. The results are shown in Table 3.

### (Example 3-7)

The procedure for preparing the polylactic acid composition in Example 3-1 was repeated to prepare polylactic acid composition of Example 3-7 except for changing the chain extender into CARBODILITE LA-1 from Nisshinbo Chemical Inc., the quantity of the polymerization initiator, the quantity of the low-polarity solvent, the quantity of the chain extender, and the temperature as shown in Table 3.

Properties of the polylactic acid composition of Example 3-7 were evaluated as that of Example 3-1 was. The results are shown in Table 3.

**Table 1(1)**

| | Example 1-1 | Example 1-2 | Example 1-3 | Example 1-4 |
|---|---|---|---|---|
| Monomer | Lactide | Lactide | Lactide | Lactide |
| Initiator | Hexanol | Ethylene glycol | Ethylene glycol | Lauryl Alcohol |
| Qty. (mol%) | 0.100 | 0.050 | 0.080 | 0.080 |
| Catalyst | di(2-ethylhexyl acid) tin | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether | Dimethyl Ether |
| Qty. (mol%) | 70 | 70 | 50 | 30 |
| Chain Extender | 2, 2'-m-phenylene-bis-(2-oxazoline) | 2, 2'-m-phenylene-bis-(3-oxazoline) | 2, 2'-m-phenylene-bis-(4-oxazoline) | 2, 2'-m-phenylene-bis-(5-oxazoline) |
| Qty. (mol%) | 1.5 | 1.0 | 4.0 | 3.0 |
| Pressure (Mpa) | 15 | 15 | 15 | 15 |
| Polymerization Temp. (°C) | 150 | 150 | 150 | 150 |
| Polymerization Time (min) | 60 | 60 | 60 | 60 |
| Chain Extending Temp. (°C) | 170 | 210 | 170 | 210 |
| Chain Extending Time (min) | 20 | 20 | 20 | 20 |
| Film Forming Temp. (°C) | 200 | 200 | 200 | 200 |
| Polymer Mn | 653000 | 962000 | 1370000 | 816000 |
| Polymer Mw/Mn | 2.1 | 2.5 | 3.6 | 3.1 |
| Amide Bond Content (mol%) | 1.7E-03 | 7.5E-03 | 2.1E-02 | 2.6E-02 |
| Residual Monomer Content (wt. ppm) | 430 | 1300 | 680 | 570 |
| YI Value | 2.6 | 6.8 | 3.1 | 8.2 |
| Melt Fluidity (g/10 min) | 2.4 | 3.6 | 1.8 | 2.7 |
| Gelated Object | None | None | None | None |

**Table 1(2)**

| | Example 1-5 | Example 1-6 | Example 1-7 | Example 1-8 |
|---|---|---|---|---|
| Monomer | Lactide | Lactide | Lactide | Lactide |
| Initiator | Ethylene glycol | Ethylene glycol | Lauryl Alcohol | Hexanol |
| Qty. (mol%) | 0.050 | 0.100 | 0.050 | 0.100 |
| Catalyst | di(2-ethylhexyl acid) tin | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether | Dimethyl Ether |
| Qty. (mol%) | 30 | 50 | 50 | 50 |
| Chain Extender | 2, 2'-m-phenylene-bis-(6-oxazoline) | 2, 2'-m-phenylene-bis-(9-oxazoline) | 2, 2'-p-phenylenebis(5, 6-dihydro-4H-1, 3-oxazoline) | EPOCROS K-2020E |
| Qty. (mol%) | 2.0 | 1.5 | 1.0 | 3.0 |
| Pressure (Mpa) | 15 | 15 | 15 | 15 |
| Polymerization Temp. (°C) | 150 | 150 | 150 | 150 |
| Polymerization Time (min) | 60 | 60 | 60 | 60 |
| Chain Extending Temp. (°C) | 170 | 170 | 210 | 170 |
| Chain Extending Time (min) | 20 | 20 | 20 | 20 |
| Film Forming Temp. (°C) | 200 | 250 | 200 | 200 |
| Polymer Mn | 1130000 | 686000 | 893000 | 645000 |
| Polymer Mw/Mn | 3.2 | 2.1 | 2.8 | 1.9 |
| Amide Bond Content (mol%) | 1.3E-02 | 1.6E-02 | 8.1E-03 | 3.3E-02 |
| Residual Monomer Content (wt. ppm) | 1600 | 570 | 5200 | 520 |
| YI Value | 4.7 | 2.4 | 15.3 | 2.1 |
| Melt Fluidity (g/10 min) | 1.9 | 2.6 | 3.1 | 2.7 |
| Gelated Object | None | None | None | None |

**Table 1(3)**

| | Comparative Example 1-1 | Comparative Example 1-2 | Comparative Example 1-3 |
|---|---|---|---|
| Monomer | Lactide | Lactide | Lactide |
| Initiator | Ethylene glycol | Ethylene glycol | Ethylene glycol |
| Qty. (mol%) | 0.040 | 0.100 | 0.050 |
| Catalyst | di(2-ethylhexyl acid) tin | di(2-ethylhexyl acid) tin | di(2-ethylhexyl acid) tin |
| Low-Polarity Solvent | - | Dimethyl Ether | Dimethyl Ether |
| Qty. (mol%) | 0 | 50 | 50 |
| Chain Extender | 2, 2'-m-phenylene-bis-(7-oxazoline) | 2, 2'-m-phenylene-bis-(8-oxazoline) | 2, 2'-m-phenylene-bis-(9-oxazoline) |
| Qty. (mol%) | 1.0 | 0.2 | 5.8 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | | 170 | 170 |
| Chain Extending Time (min) | | 20 | 20 |
| Film Forming Temp. (°C) | | 200 | 200 |
| Polymer Mn | | 286000 | 2350000 |
| Polymer Mw/Mn | | 1.5 | 4.9 |
| Amide Bond Content (mol%) | Unproducibly Solidified | 5.0E-03 | 1.8E-02 |
| Residual Monomer Content (wt. ppm) | | 410 | 2100 |
| YI Value | | 2.8 | 3.6 |
| Melt Fluidity (g/10 min) | | 5.8 | 3.2 |
| Gelated Object | | None | Observed |

**Table 2(1)**

| | Example 2-1 | Example 2-2 | Example 2-3 | Example 2-4 |
|---|---|---|---|---|
| Monomer | Lactide | Lactide | Lactide | Lactide |
| Initiator | Ethylene glycol | Ethylene glycol | Hexanol | Lauryl Alcohol |
| Qty. (mol%) | 0.080 | 0.050 | 0.100 | 0.080 |
| Catalyst | di(2-ethylhexyl acid) tin | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether | Dimethyl Ether |
| Qty. (mol%) | 70 | 70 | 50 | 30 |
| Chain Extender | Isophorone diisocyanate | Isophorone diisocyanate | Isophorone diisocyanate | Isophorone diisocyanate |
| Qty. (mol%) | 4.0 | 1.0 | 1.5 | 3.0 |
| Pressure (Mpa) | 15 | 15 | 15 | 15 |
| Polymerization Temp. (°C) | 150 | 150 | 150 | 150 |
| Polymerization Time (min) | 60 | 60 | 60 | 60 |
| Chain Extending Temp. (°C) | 170 | 210 | 170 | 210 |
| Chain Extending Time (min) | 20 | 20 | 20 | 20 |
| Film Forming Temp. (°C) | 200 | 200 | 200 | 200 |
| Polymer Mn | 1250000 | 932000 | 510000 | 751000 |
| Polymer Mw/Mn | 3.4 | 2.5 | 2.2 | 2.9 |
| Amide Bond Content (mol%) | 2.30E-02 | 7.70E-03 | 2.10E-02 | 2.90E-02 |
| Residual Monomer Content (wt. ppm) | 380 | 1200 | 750 | 490 |
| YI Value | 2.1 | 4.3 | 2.8 | 9.3 |
| Melt Fluidity (g/10 min) | 2.1 | 3.2 | 1.6 | 3.2 |
| Gelated Object | None | None | None | None |

**Table 2(2)**

| | Example 2-5 | Example 2-6 | Example 2-7 | Example 2-8 |
|---|---|---|---|---|
| Monomer | Lactide | Lactide | Lactide | Lactide |
| Initiator | Ethylene glycol | Ethylene glycol | Lauryl Alcohol | Hexanol |
| Qty. (mol%) | 0.050 | 0.100 | 0.050 | 0.100 |
| Catalyst | di(2-ethylhexyl acid) tin | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether | Dimethyl Ether |
| Qty. (mol%) | 30 | 50 | 50 | 50 |
| Chain Extender | Isophorone diisocyanate | Isophorone diisocyanate | Hexamethylene diisocyanate | Tolylene diisocyanate |
| Qty. (mol%) | 2.0 | 1.5 | 1.0 | 3.0 |
| Pressure (Mpa) | 15 | 15 | 15 | 15 |
| Polymerization Temp. (°C) | 150 | 150 | 150 | 150 |
| Polymerization Time (min) | 60 | 60 | 60 | 60 |
| Chain Extending Temp. (°C) | 170 | 170 | 210 | 170 |
| Chain Extending Time (min) | 20 | 20 | 20 | 20 |
| Film Forming Temp. (°C) | 200 | 250 | 200 | 200 |
| Polymer Mn | 1130000 | 584000 | 821000 | 594000 |
| Polymer Mw/Mn | 3.4 | 2.3 | 2.5 | 1.8 |
| Amide Bond Content (mol%) | 1.30E-02 | 1.80E-02 | 8.80E-03 | 3.60E-02 |
| Residual Monomer Content (wt. ppm) | 1560 | 630 | 4300 | 480 |
| YI Value | 6.2 | 2.8 | 14.3 | 5.2 |
| Melt Fluidity (g/10 min) | 2.0 | 2.1 | 2.8 | 2.4 |
| Gelated Object | None | None | None | None |

**Table 2(3)**

| | Comparative Example 2-1 | Comparative Example 2-2 | Comparative Example 2-3 |
|---|---|---|---|
| Monomer | Lactide | Lactide | Lactide |
| Initiator | Ethylene glycol | Ethylene glycol | Ethylene glycol |
| Qty. (mol%) | 0.040 | 0.100 | 0.050 |
| Catalyst | di(2-ethylhexyl acid) tin | di(2-ethylhexyl acid) tin | di(2-ethylhexyl acid) tin |
| Low-Polarity Solvent | - | Dimethyl Ether | Dimethyl Ether |
| Qty. (mol%) | 0 | 50 | 50 |
| Chain Extender | Isophorone diisocyanate | Isophorone diisocyanate | Isophorone diisocyanate |
| Qty. (mol%) | 1.0 | 0.2 | 5.8 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | | 170 | 170 |
| Chain Extending Time (min) | | 20 | 20 |
| Film Forming Temp. (°C) | | 200 | 200 |
| Polymer Mn | | 256000 | 2140000 |
| Polymer Mw/Mn | | 1.4 | 4.5 |
| Amide Bond Content (mol%) | Unproducibly Solidified | 5.60E-03 | 2.00E-02 |
| Residual Monomer Content (wt. ppm) | | 380 | 1800 |
| YI Value | | 2.4 | 4.6 |
| Melt Fluidity (g/10 min) | | 4.9 | 2.8 |
| Gelated Object | | None | Observed |

**Table 3(1)**

| | Example 3-1 | Example 3-2 | Example 3-3 | Example 3-4 |
|---|---|---|---|---|
| Monomer | Lactide | Lactide | Lactide | Lactide |
| Initiator | Hexanol | Ethylene glycol | Ethylene glycol | Lauryl Alcohol |
| Qty. (mol%) | 0.050 | 0.025 | 0.040 | 0.040 |
| Catalyst | di(2-ethylhexyl acid) tin | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether | Dimethyl Ether |
| Qty. (mol%) | 70 | 70 | 50 | 30 |
| Chain Extender | Stabaxol P | Stabaxol P | Stabaxol P | Stabaxol P |
| Qty. (mol%) | 5 | 5 | 10 | 5 |
| Pressure (Mpa) | 15 | 15 | 15 | 15 |
| Polymerization Temp. (°C) | 150 | 150 | 150 | 150 |
| Polymerization Time (min) | 60 | 60 | 60 | 60 |
| Chain Extending Temp. (°C) | 170 | 210 | 170 | 210 |
| Chain Extending Time (min) | 20 | 20 | 20 | 20 |
| Film Forming Temp. (°C) | 200 | 200 | 200 | 200 |
| Polymer Mn | 604000 | 1034 | 1250000 | 842000 |
| Polymer Mw/Mn | 2.1 | 2.4 | 3.7 | 3.1 |
| Amide Bond Content (mol%) | 3.00E-02 | 1.70E-02 | 2.90E-02 | 2.10E-02 |
| Residual Monomer Content (wt. ppm) | 400 | 1500 | 800 | 500 |
| YI Value | 2.6 | 7.5 | 3.1 | 8.2 |
| Melt Fluidity (g/10 min) | 2.2 | 3.5 | 1.9 | 2.7 |
| Gelated Object | None | None | None | None |

**Table 3(2)**

| | Example 3-5 | Example 3-6 | Example 3-7 |
|---|---|---|---|
| Monomer | Lactide | Lactide | Lactide |
| Initiator | Ethylene glycol | Ethylene glycol | Lauryl Alcohol |
| Qty. (mol%) | 0.025 | 0.050 | 0.025 |
| Catalyst | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether |
| Qty. (mol%) | 30 | 50 | 50 |
| Chain Extender | Stabaxol P | Stabaxol P | LA-1 |
| Qty. (mol%) | 3 | 3 | 3 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | 170 | 170 | 210 |
| Chain Extending Time (min) | 20 | 20 | 20 |
| Film Forming Temp. (°C) | 200 | 250 | 200 |
| Polymer Mn | 1080000 | 702000 | 855000 |
| Polymer Mw/Mn | 3.3 | 2.2 | 3.0 |
| Amide Bond Content (mol%) | 1.00E-02 | 1.50E-02 | 1.30E-02 |
| Residual Monomer Content (wt. ppm) | 2000 | 500 | 5200 |
| YI Value | 4.7 | 2.2 | 15.2 |
| Melt Fluidity (g/10 min) | 2.0 | 2.4 | 3.3 |
| Gelated Object | None | None | None |

**Table 3(3)**

| | Comparative Example 3-1 | Comparative Example 3-2 | Comparative Example 3-3 |
|---|---|---|---|
| Monomer | Lactide | Lactide | Lactide |
| Initiator | Ethylene glycol | Ethylene glycol | Ethylene glycol |
| Qty. (mol%) | 0.020 | 0.050 | 0.025 |
| Catalyst | di(2-ethylhexyl acid) tin | di(2-ethylhexyl acid) tin | di(2-ethylhexyl acid) tin |
| Low-Polarity Solvent | - | Dimethyl Ether | Dimethyl Ether |
| Qty. (mol%) | 0 | 50 | 50 |
| Chain Extender | Stabaxol P | Stabaxol P | Stabaxol P |
| Qty. (mol%) | 3 | 1 | 20 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | | 170 | 170 |
| Chain Extending Time (min) | | 20 | 20 |
| Film Forming Temp. (°C) | | 200 | 200 |
| Polymer Mn | | 277000 | 2220000 |
| Polymer Mw/Mn | | 1.5 | 4.9 |
| Amide Bond Content (mol%) | Unproducibly Solidified | 1.30E-02 | 3.20E-02 |
| Residual Monomer Content (wt. ppm) | | 400 | 2200 |
| YI Value | | 3.0 | 3.9 |
| Melt Fluidity (g/10 min) | | 6.0 | 3.3 |
| Gelated Object | | None | Observed |

**Table 4(1)**

| | Comparative Example 1-4 | Comparative Example 1-5 | Comparative Example 2-4 |
|---|---|---|---|
| Monomer | Lactide | Lactide | Lactide |
| Initiator | Ethylene glycol | Ethylene glycol | Lauryl Alcohol |
| Qty. (mol%) | 0.050 | 0.050 | 0.050 |
| Catalyst | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether |
| Qty. (mol%) | 30 | 50 | 50 |
| Chain Extender | 2, 2'-m-phenylene-bis-(8-oxazoline) | 2, 2'-m-phenylene-bis-(9-oxazoline) | Isophorone diisocyanate |
| Qty. (mol%) | 0.04 | 50.0 | 0.04 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | 170 | 170 | 170 |
| Chain Extending Time (min) | 20 | 20 | 20 |
| Film Forming Temp. (°C) | 200 | 200 | 200 |
| Polymer Mn | 294000 | 3470000 | 273000 |
| Polymer Mw/Mn | 1.4 | 4.9 | 1.3 |
| Amide Bond Content (mol%) | 8.0E-04 | 1.2E-01 | 9.0E-04 |
| Residual Monomer Content (wt. ppm) | 560 | 3700 | 630 |
| YI Value | 2.5 | 4.3 | 3.2 |
| Melt Fluidity (g/10 min) | 7.8 | 2.1 | 8.4 |
| Gelated Object | None | Observed | None |

**Table 4(2)**

| | Comparative Example 2-5 | Comparative Example 3-4 | Comparative Example 3-5 |
|---|---|---|---|
| Monomer | Lactide | Lactide | Lactide |
| Initiator | Ethylene glycol | Ethylene glycol | Lauryl Alcohol |
| Qty. (mol%) | 0.050 | 0.050 | 0.050 |
| Catalyst | di(2-ethylhexyl acid) tin | di(2-ethylhexyl acid) tin | di(2-ethylhexyl acid) tin |
| Low-Polarity Solvent | Dimethyl Ether | Dimethyl Ether | Dimethyl Ether |
| Qty. (mol%) | 30 | 50 | 50 |
| Chain Extender | Isophorone diisocyanate | Stabaxol P | Stabaxol P |
| Qty. (mol%) | 50.00 | 0.50 | 50.00 |
| Pressure (Mpa) | 15 | 15 | 15 |
| Polymerization Temp. (°C) | 150 | 150 | 150 |
| Polymerization Time (min) | 60 | 60 | 60 |
| Chain Extending Temp. (°C) | 170 | 170 | 170 |
| Chain Extending Time (min) | 20 | 20 | 20 |
| Film Forming Temp. (°C) | 200 | 200 | 200 |
| Polymer Mn | 316000 | 266000 | 328000 |
| Polymer Mw/Mn | 5.1 | 1.5 | 4.7 |
| Amide Bond Content (mol%) | 1.3E-01 | 7.0E-04 | 1.1E-01 |
| Residual Monomer Content (wt. ppm) | 2700 | 370 | 4100 |
| YI Value | 5.3 | 2.8 | 5.1 |
| Melt Fluidity (g/10 min) | 1.9 | 8.6 | 1.6 |
| Gelated Object | Observed | None | Observed |

Having now fully described the invention, it will be apparent to one of ordinary skill in the art that many changes and modifications can be made thereto without departing from the scope of the invention as claimed.

## Claims

1. An aliphatic polyester having a number-average molecular weight of from 500,000 to 2,000,000, determined as indicated in the description comprising an ester bonding site and an amide bonding site, wherein the content of the amide bonding determined as indicated in the description is from 1 x 10⁻³% to 1 x 10⁻¹% by mol based on total weight of the ester bonding site and the amide bonding site.

2. The aliphatic polyester of Claim 1, further comprising a residual monomer in an amount not greater than 5,000 ppm by weight.

3. The aliphatic polyester of Claim 1 or Claim 2, having a yellow index (YI) value not greater than 15 determined as indicated in the description.

4. A polymer molding product, comprising the aliphatic polyester according to any one of Claims 1 to 3.

## Patentansprüche

1. Aliphatischer Polyester, der ein zahlendurchschnittliches Molekulargewicht von 500.000 bis 2.000.000, wie in der Beschreibung angegeben bestimmt, aufweist,
umfassend eine Esterbindungsstelle und eine Amidbindungsstelle, wobei der Gehalt der Amidbindungsstelle, wie in der Beschreibung angegeben bestimmt,
1 x 10⁻³ bis 1 x 10⁻¹ Mol-%, auf das Gesamtgewicht der Esterbindungsstelle und der Amidbindungsstelle bezogen, beträgt.

2. Aliphatischer Polyester nach Anspruch 1, ferner ein Restmonomer in einer Menge von nicht mehr als 5000 Gewichts-ppm umfassend.

3. Aliphatischer Polyester nach Anspruch 1 oder Anspruch 2, der einen Gelbindex-(YI) Wert von nicht mehr als 15, wie in der Beschreibung angegeben bestimmt, aufweist.

4. Polymerformprodukt umfassend den aliphatischen Polyester nach irgendeinem der Ansprüche 1 bis 3.

## Revendications

1. Polyester aliphatique présentant un poids moléculaire moyen en nombre de 500 000 à 2 000 000 déterminé tel qu'indiqué dans la description
comprenant un site de liaison ester et un site de liaison amide, la teneur de la liaison amide déterminée tel qu'indiqué dans la description étant de 1 x 10⁻³ % à 1 x 10⁻¹% en mole basée sur le poids total du site de liaison ester et du site de liaison amide.

2. Polyester aliphatique selon la revendication 1, comprenant en outre un monomère résiduel en une quantité non supérieure à 5 000 ppm en poids.

3. Polyester aliphatique selon la revendication 1 ou la revendication 2, ayant une valeur d'indice de jaunissement (YI) non supérieure à 15 déterminée tel qu'indiqué dans la description.

4. Produit de moulage polymère, comprenant le polyester aliphatique selon l'une quelconque des revendications 1 à 3.
